# EUROPEAN PATENT APPLICATION

(11) **EP 2 858 339 A1**
(43) Date of publication of application: **08.04.2015**
(21) Application number: 13796606.5
(22) Date of filing: 22.05.2013
(51) Int. Cl.: H04M 11/00, B25J 9/16

(54) **INFORMATION PROCESSING SYSTEM, INFORMATION PROCESSING METHOD, INFORMATION PROCESSING DEVICE, MOBILE TERMINAL AND CONTROL METHOD AND CONTROL PROGRAM THEREFOR**

(30) Priority: 30.05.2012 JP 2012123800
(71) Applicant: NEC Corporation, Tokyo 108-8001 (JP)
(72) Inventor: KOBAYASHI, Yoshikazu, Tokyo 108-8001 (JP)
(74) Representative: Vossius & Partner
(86) International application number: PCT/JP2013/064233
(87) International publication number: WO 2013/179980

(57) **Abstract**

An apparatus of this invention is directed to an information processing apparatus that controls a device from an information processing apparatus in conformity with an operation condition of the device acquired by a portable terminal when the device is connected to the portable terminal. The information processing apparatus includes a device information receiver that receives, via a network, device information acquired by the portable terminal including a device connector, an operation information receiver that receives, via the network, operation condition information representing an operation condition of the device acquired by the portable terminal, and a device controller that controls the device based on the received device information and operation condition information.

## Description

### TECHNICAL FIELD

The present invention relates to a technique of controlling a device such as an industrial device connected to a portable terminal.

### BACKGROUND ART

In the above technical field, patent literature 1 discloses a technique of causing a knowledge management apparatus to collet and manage knowledge information from free-standing robots and select and provide control information corresponding to peripheral environment information received from the robots. In addition, patent literature 2 discloses a technique of connecting a USB device to a thin client in a thin client-server system and controlling the USB device from a server.

### CITATION LIST

### PATENT LITERATURE

Patent literature 1: Japanese Patent Laid-Open No. 2005-111603
Patent literature 2: Japanese Patent Laid-Open No. 2010-218347

### SUMMARY OF THE INVENTION

### TECHNICAL PROBLEM

In the techniques described in the above literatures, however, when an industrial device such as a free-standing robot is connected, as a USB device, to a portable terminal, it is impossible to control the device from the server in conformity with the operation condition of the device acquired by the portable terminal.

The present invention enables to provide a technique of solving the above-described problem.

### SOLUTION TO PROBLEM

One aspect of the present invention provides an information processing apparatus comprising:
a device information receiver that receives, from a first portable terminal, device information for identifying a device connected to the first portable terminal;
an operation information receiver that receives, from the first portable terminal, operation condition information representing an operation condition of the device acquired by the first portable terminal; and
a device controller that controls the device based on the device information and the operation condition information.

Another aspect of the present invention provides a control method of an information processing apparatus, comprising:
receiving, from a first portable terminal, device information for identifying a device connected to the first portable terminal;
receiving, from the first portable terminal, operation condition information representing an operation condition of the device acquired by the first portable terminal; and
controlling the device based on the device information and the operation condition information.

Still other aspect of the present invention provides a control program of an information processing apparatus, the program causing a computer to execute:
receiving, from a first portable terminal, device information for identifying a device connected to the first portable terminal;
receiving, from the first portable terminal, operation condition information representing an operation condition of the device acquired by the first portable terminal; and
controlling the device based on the device information and the operation condition information.

Still other aspect of the present invention provides a portable terminal comprising:
a device connector;
a device information transmitter that transmits, to an information processing apparatus, device information for identifying a device connected to the device connector;
an operation information transmitter that acquires one of operation condition information representing an operation condition of the device and operation state information representing an operation state of the device and transmits the one of the operation condition information and the operation state information to the information processing apparatus; and
a device control relay unit that relays control of the device by the information processing apparatus based on the device information and one of the operation condition information and the operation state information.

Still other aspect of the present invention provides a control method of a portable terminal including a device connector, comprising:
transmitting, to an information processing apparatus, device information for identifying a device connected to the device connector;
acquiring one of operation condition information representing an operation condition of the device and operation state information representing an operation state of the device and transmitting the one of the operation condition information and the operation state information to the information processing apparatus; and
relaying control of the device by the information processing apparatus based on the device information and the operation condition information.

Still other aspect of the present invention provides a control program of a portable terminal including a device connector, the program causing a computer to execute:
transmitting, to an information processing apparatus, device information for identifying a device connected to the device connector;
acquiring one of operation condition information representing an operation condition of the device and operation state information representing an operation state of the device and transmitting the one of the operation condition information and the operation state information to the information processing apparatus; and
relaying control of the device by the information processing apparatus based on the device information and the operation condition information.

Still other aspect of the present invention provides an information processing system comprising a portable terminal including a device connector, a device connectable to the device connector, and an information processing apparatus connected to the portable terminal via a network,
the portable terminal comprising:
a device information transmitter that transmits device information for identifying the device connected to the device connector to the information processing apparatus via the network; and
an operation information transmitter that acquires operation condition information representing an operation condition under which the device is placed and transmits the operation condition information to the information processing apparatus via the network, and
the information processing apparatus comprising a device controller that controls the device via the network and the portable terminal based on the device information and the operation condition information.

Still other aspect of the present invention provides an information processing method of an information processing system including a portable terminal including a device connector, a device connectable to the device connector, and an information processing apparatus connected to the portable terminal via a network, the method comprising:
transmitting device information for identifying the device connected to the device connector from the portable terminal to the information processing apparatus via the network;
acquiring operation condition information representing an operation condition under which the device is placed and transmit the operation condition information from the portable terminal to the information processing apparatus via the network; and
controlling the device via the network and the portable terminal based on the device information and the operation condition information.

### ADVANTAGEOUS EFFECTS OF INVENTION

According to the present invention, when a device is connected to a portable terminal, it is possible to control the device from an information processing apparatus (server or the like) in conformity with the operation condition of the device acquired by the portable terminal.

### BRIEF DESCRIPTION OF DRAWINGS

Fig. 1 is a block diagram showing the arrangement of an information processing apparatus according to the first embodiment of the present invention;
Fig. 2A is a view for explaining the operation concept of an information processing system according to the second embodiment of the present invention;
Fig. 2B is a block diagram showing the arrangement of the information processing system according to the second embodiment of the present invention;
Fig. 3A is a sequence chart showing the operation procedure of the information processing system according to the second embodiment of the present invention;
Fig. 3B is a sequence chart showing the control procedure of a USB-connected USB device according to the second embodiment of the present invention;
Fig. 3C is a sequence chart showing the control procedure of the USB-connected USB device according to the second embodiment of the present invention;
Fig. 3D is a sequence chart showing the control procedure of a device other than the USB-connected USB device according to the second embodiment of the present invention;
Fig. 4 is a block diagram showing the functional arrangement of a cloud server according to the second embodiment of the present invention;
Fig. 5 is a block diagram showing the functional arrangement of a portable terminal according to the second embodiment of the present invention;
Fig. 6 is a block diagram showing the functional arrangement of a device (industrial device) according to the second embodiment of the present invention;
Fig. 7A is a view showing the arrangement of a device DB according to the second embodiment of the present invention;
Fig. 7B is a view showing the arrangement of a device descriptor according to the second embodiment of the present invention;
Fig. 8A is a view showing the arrangement of a program history DB according to the second embodiment of the present invention;
Fig. 8B is a view showing the arrangement of a parameter history DB according to the second embodiment of the present invention;
Fig. 9 is a block diagram showing the hardware arrangement of the cloud server according to the second embodiment of the present invention;
Fig. 10A is a view showing the arrangement of a program selection table according to the second embodiment of the present invention;
Fig. 10B is a view showing the arrangement of a parameter selection table according to the second embodiment of the present invention;
Fig. 11 is a flowchart showing the processing procedure of the cloud server according to the second embodiment of the present invention;
Fig. 12A is a flowchart showing the processing procedure of program selection processing according to the second embodiment of the present invention;
Fig. 12B is a flowchart showing the processing procedure of instructed operation execution processing according to the second embodiment of the present invention;
Fig. 13 is a block diagram showing the hardware arrangement of the portable terminal according to the second embodiment of the present invention;
Fig. 14 is a flowchart showing the processing procedure of the portable terminal according to the second embodiment of the present invention;
Fig. 15 is a view for explaining the operation concept of an information processing system according to the third embodiment of the present invention;
Fig. 16 is a sequence chart showing the operation procedure of the information processing system according to the third embodiment of the present invention;
Fig. 17 is a block diagram showing the functional arrangement of a cloud server according to the third embodiment of the present invention;
Fig. 18 is a view showing the arrangement of a program history DB according to the third embodiment of the present invention;
Fig. 19 is a view showing the arrangement of a parameter history DB according to the third embodiment of the present invention;
Fig. 20 is a view showing the arrangement of a program verification/change table according to the third embodiment of the present invention;
Fig. 21 is a flowchart showing the processing procedure of the cloud server according to the third embodiment of the present invention;
Fig. 22 is a flowchart showing the processing procedure of program selection processing according to the third embodiment of the present invention;
Fig. 23 is a view for explaining the operation concept of an information processing system according to the fourth embodiment of the present invention;
Fig. 24 is a sequence chart showing the operation procedure of the information processing system according to the fourth embodiment of the present invention;
Fig. 25 is a block diagram showing the functional arrangement of a cloud server according to the fourth embodiment of the present invention;
Fig. 26 is a view showing the arrangement of a sensor/device combination table according to the fourth embodiment of the present invention;
Fig. 27 is a flowchart showing the processing procedure of the cloud server according to the fourth embodiment of the present invention;
Fig. 28 is a flowchart showing the processing procedure of virtual PC generation processing according to the fourth embodiment of the present invention;
Fig. 29A is a view for explaining the first operation concept of an information processing system according to the fifth embodiment of the present invention;
Fig. 29B is a view for explaining the second operation concept of an information processing system according to the fifth embodiment of the present invention;
Fig. 30 is a sequence chart showing the operation procedure of the information processing system according to the fifth embodiment of the present invention;
Fig. 31 is a block diagram showing the functional arrangement of a cloud server according to the fifth embodiment of the present invention;
Fig. 32 is a view showing the arrangement of a timing control table according to the fifth embodiment of the present invention;
Fig. 33 is a flowchart showing the processing procedure of the cloud server according to the fifth embodiment of the present invention;
Fig. 34 is a flowchart showing the processing procedure of timing control processing according to the fifth embodiment of the present invention;
Fig. 35A is a view for explaining the first operation concept of an information processing system according to the sixth embodiment of the present invention;
Fig. 35B is a view for explaining the second operation concept of an information processing system according to the sixth embodiment of the present invention;
Fig. 36A is a sequence chart showing the first operation procedure of the information processing system according to the sixth embodiment of the present invention;
Fig. 36B is a sequence chart showing the second operation procedure of the information processing system according to the sixth embodiment of the present invention;
Fig. 37 is a block diagram showing the functional arrangement of a cloud server according to the sixth embodiment of the present invention;
Fig. 38 is a block diagram showing the functional arrangement of a portable terminal according to the sixth embodiment of the present invention;
Fig. 39 is a view showing the arrangement of a program history DB according to the sixth embodiment of the present invention;
Fig. 40 is a flowchart showing the processing procedure of the cloud server according to the sixth embodiment of the present invention;
Fig. 41 is a flowchart showing the processing procedure of program selection processing according to the sixth embodiment of the present invention;
Fig. 42 is a flowchart showing the processing procedure of the portable terminal according to the sixth embodiment of the present invention; and
Fig. 43 is a flowchart showing the processing procedure of control program processing according to the sixth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

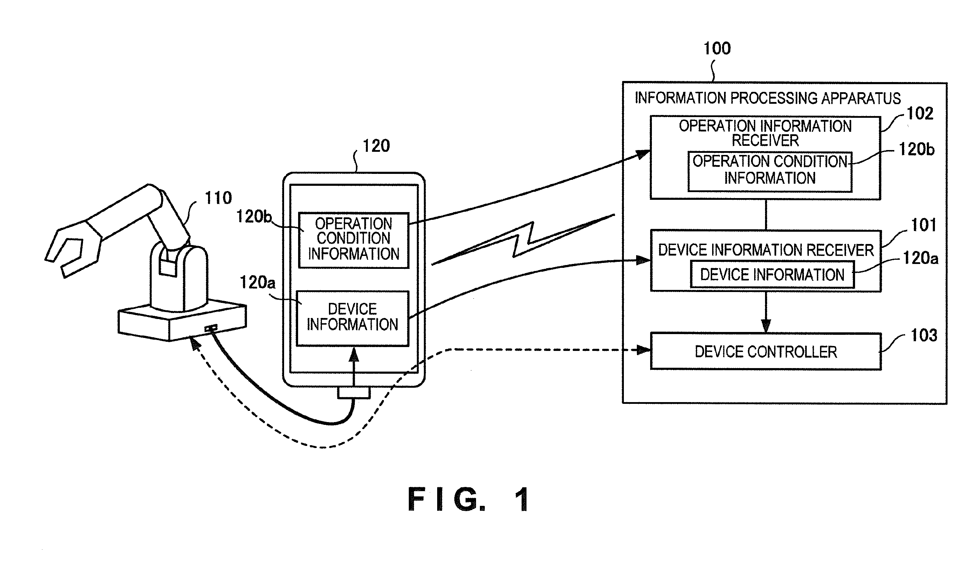

An information processing apparatus 100 according to the first embodiment of the present invention will be described with reference to Fig. 1. The information processing apparatus 100 is an apparatus that controls, via a first portable terminal 120, a device 110 connected to the first portable terminal 120.

As shown in Fig. 1, the information processing apparatus 100 includes a device information receiver 101, an operation information receiver 102, and a device controller 103. The device information receiver 101 receives, from the first portable terminal 120, device information 120a that specifies the device 110 connected to the first portable terminal 120. The operation information receiver 102 receives, from the first portable terminal 120, operation condition information 120b representing the operation condition of the device 110 acquired by the first portable terminal 120. The device controller 103 controls the device 110 based on the device information 120a and the operation condition information 120b.

According to this embodiment, when a device is connected to the portable terminal, the information processing apparatus (server or the like) controls the device based on device information and operation condition information. It is therefore possible to control the device from the information processing apparatus in conformity with the operation condition of the device acquired by the portable terminal.

### [Second Embodiment]

An information processing system according to the second embodiment of the present invention will be described next. Note that in this embodiment, a description will be made using a cloud server as an example of a server. In this embodiment, a robot arm that is an industrial device connected to the USB connector of a portable terminal is controlled by the cloud server in accordance with an operation using the operation screen of the portable terminal. The device information (device descriptor) of the connected robot arm and the operation condition information (room temperature, operation time, and the like) of the robot arm are transmitted from the portable terminal to the cloud server via a network. Based on the device information and the operation condition information, the cloud server selects a device driver program configured to drive the robot arm, an application program that controls the operation sequence of the robot arm, and various kinds of parameters to be used in these programs. Control conforming to the connected robot arm and its operation conditions is thus implemented. The device driver program will also be referred to as a device driver or driver, and the application program will also be referred to as an application hereinafter. In the second embodiment, the operation of the robot arm can be controlled from the display screen of the portable terminal as if the portable terminal controlled the robot arm. However, the device is not limited to the robot arm. Note that in this embodiment, the operation condition information includes specification information representing the specifications of the device and environment information representing the environment in which the device is placed. The environment information includes one of a temperature, a humidity, an atmospheric pressure, and an operation time.

According to this embodiment, when an industrial device as a USB device is connected to the portable terminal, each device can be controlled from an information processing apparatus (server) in conformity with the operation condition of the industrial device with a worldwide coverage, which is acquired by the portable terminal.

### «Information Processing System»

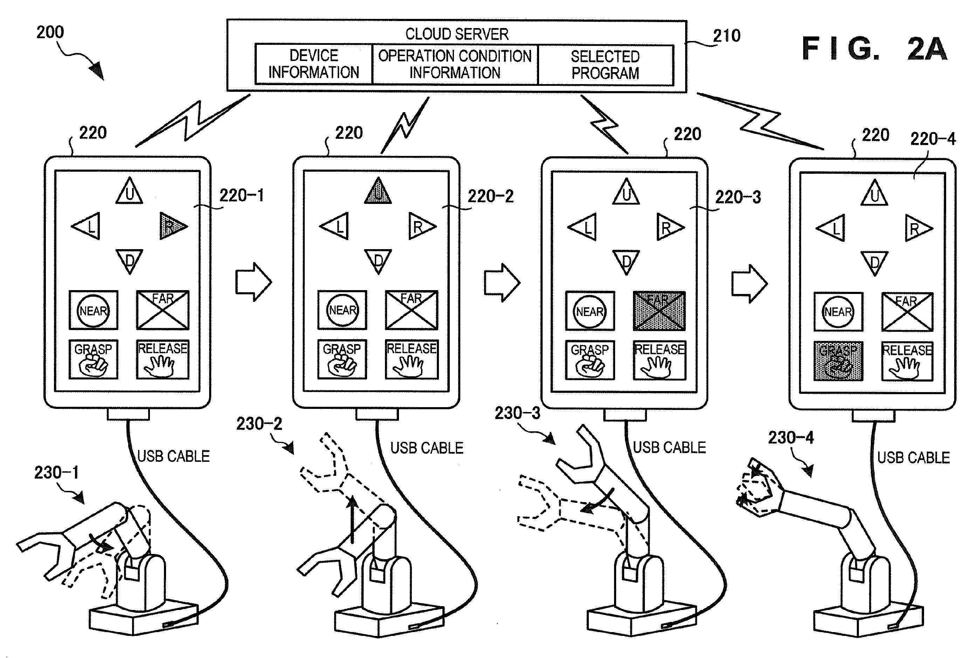

The operation of an information processing system 200 according to this embodiment will be described with reference to Figs. 2A to 3D.

### (Operation Concept)

Fig. 2A is a view for explaining the operation concept of the information processing system 200 according to this embodiment.

In the information processing system 200, a cloud server 210 controls the operation of a robot arm 230 (230-1 to 230-4) that is an industrial device connected to the USB connector of a portable terminal 220 in accordance with an operation instruction from the screen of the portable terminal 220.

In Fig. 2A, the operation of the portable terminal 220 and that of the robot arm 230 progress from left to right. In the leftmost view, the robot arm 230-1 is connected to the USB connector of the portable terminal 220. First, the portable terminal 220 acquires a device descriptor that is device information from the robot arm 230-1 in accordance with a USB protocol. Next, the user inputs, to the portable terminal 220, operation condition information associated with program selection, including environment information of the location of the robot arm 230-1. The portable terminal 220 transmits the device information and the operation condition information to the cloud server 210. Based on the device information and the operation condition information, the cloud server 210 selects a device driver configured to drive the robot arm 230-1, an application that controls the operation procedure of the robot arm 230-1, and associated parameters. The cloud server 210 activates the application using the selected parameters, and activates the device driver under the application. The activated application sends an operation screen 220-1 to the portable terminal 220 and causes it to display the screen.

In the leftmost view, assume that the hatched "right" operation button of the operation screen 220-1 is pressed. As shown on the lower side of the leftmost view, the robot arm 230-1 rotates its arm rightward, as indicated by the arrow, under the control of the cloud server 210. In the next view, assume that the hatched "up" operation button of an operation screen 220-2 is pressed. As shown on the lower side, the robot arm 230-2 lifts its arm upward, as indicated by the arrow, under the control of the cloud server 210. In the next view, assume that the hatched "far" operation button of an operation screen 220-3 is pressed. As shown on the lower side, the robot arm 230-3 extends its arm to the far side, as indicated by the arrow, under the control of the cloud server 210. In the rightmost view, assume that the hatched "grasp" operation button of an operation screen 220-4 is pressed. As shown on the lower side, the robot arm 230-4 grasps an object with the distal end of its arm, as indicated by the arrow, under the control of the cloud server 210.

As described above, the robot arm 230 operates under the control of the cloud server 210 as if the portable terminal 220 had a program for operating the robot arm 230 and executes it.

### (System Arrangement)

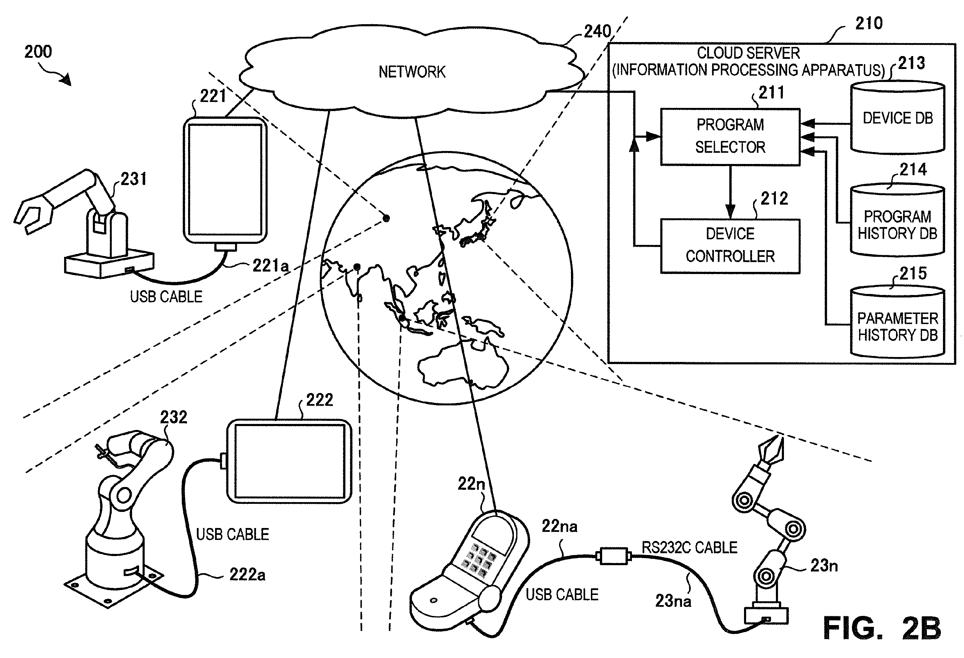

Fig. 2B is a block diagram showing the arrangement of the information processing system 200 according to this embodiment. Note that the arrangement of the information processing system 200 shown in Fig. 2B is merely an example, and the arrangement is not limited to this.

Referring to Fig. 2B, the cloud server 210 is assumed to exist in Japan. Robot arms 231 to 23n deployed at many places in the world are connected to the USB connectors of portable terminals 221 to 22n by USB cables 221 a to 22na via a network 240. The cloud server 210 selects and executes applications, device drivers, and parameters conforming to the robot arms 231 to 23n and their operation conditions, and implements optimum operation control of the robot arms 231 to 23n. Note that in Fig. 2B, the robot arm 23n is assumed to be connected by an RS232C cable 23na. The RS232C cable 23na is connected to the USB cable 22na by signal conversion and then connected to the USB connector of the portable terminal 22n.

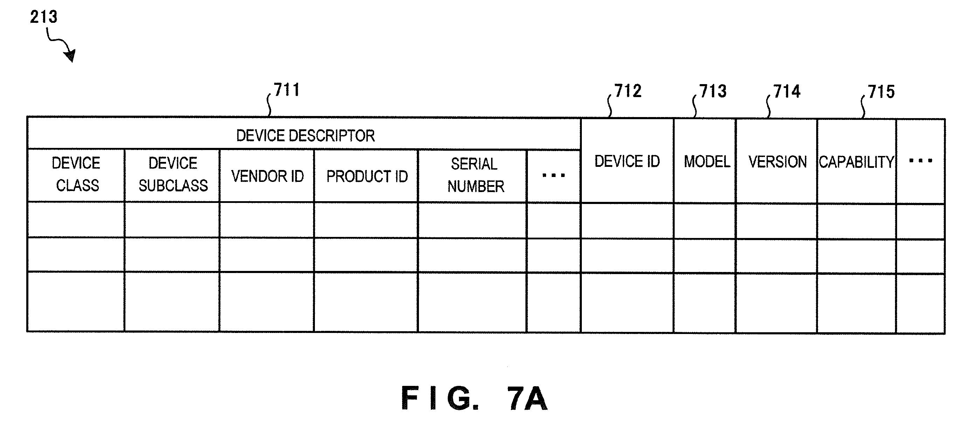

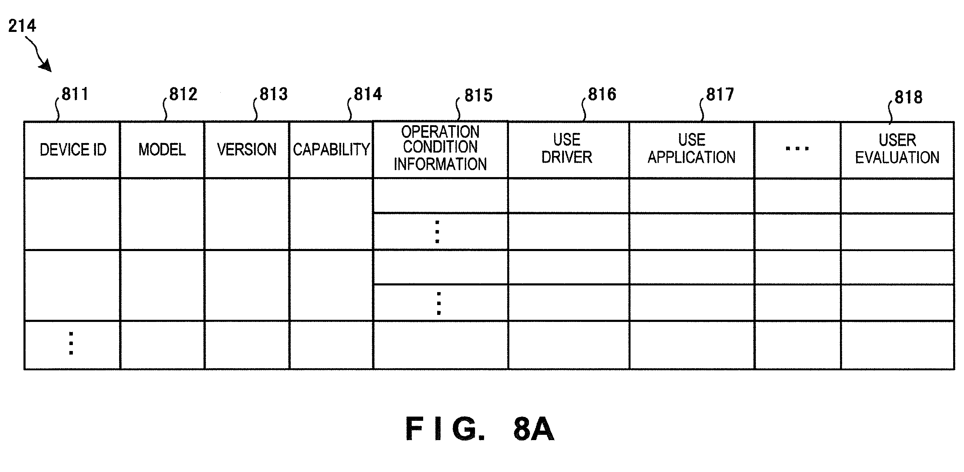

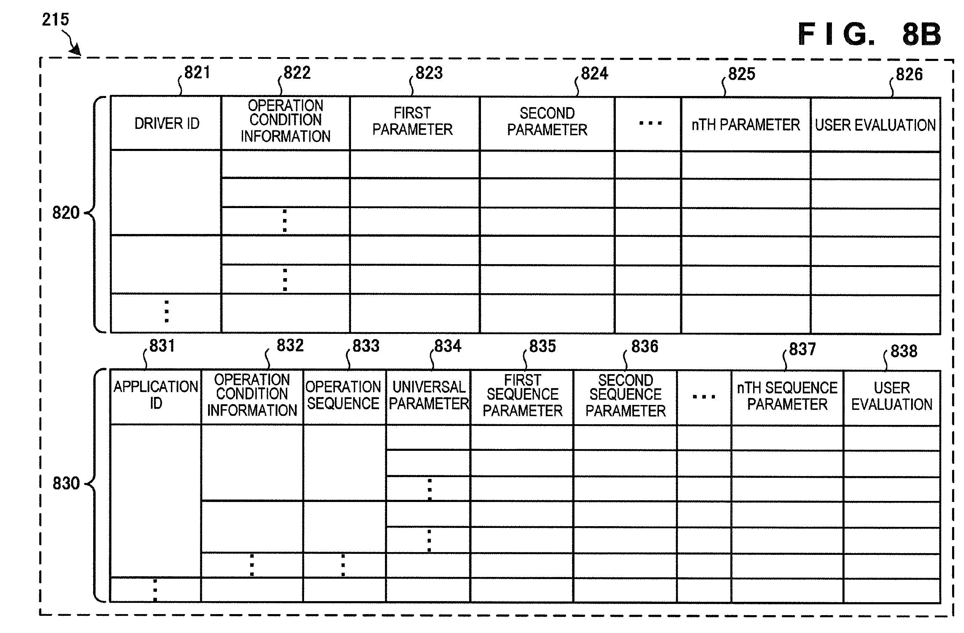

The cloud server 210 serving as an information processing apparatus includes a program selector 211, a device controller 212, a device DB 213, a program history DB 214, and a parameter history DB 215. Based on the device information of the robot arms 231 to 23n and the operation conditions of the robot arms 231 to 23n, which are received from the portable terminals 221 to 22n connected to the robot arms 231 to 23n at many places in the world, the program selector 211 selects programs for controlling the operations of the robot arms and parameters to be used. Each selected program includes a device driver and an application. A program conforming to a robot arm specified by referring to the device DB 213 (see Fig. 7A) and its operation condition is selected by referring to the program history DB 214 (see Fig. 8A) that accumulates a program history. As for the parameters to be selected, parameters conforming to the operation condition upon referring to the selected program are selected by referring to the parameter history DB 215 (see Fig. 8B) that accumulates a parameter history.

The device controller 212 executes selected program using the selected parameters and controls the operations of the robot arms 231 to 23n via the portable terminals 221 to 22n.

### (Operation Procedure)

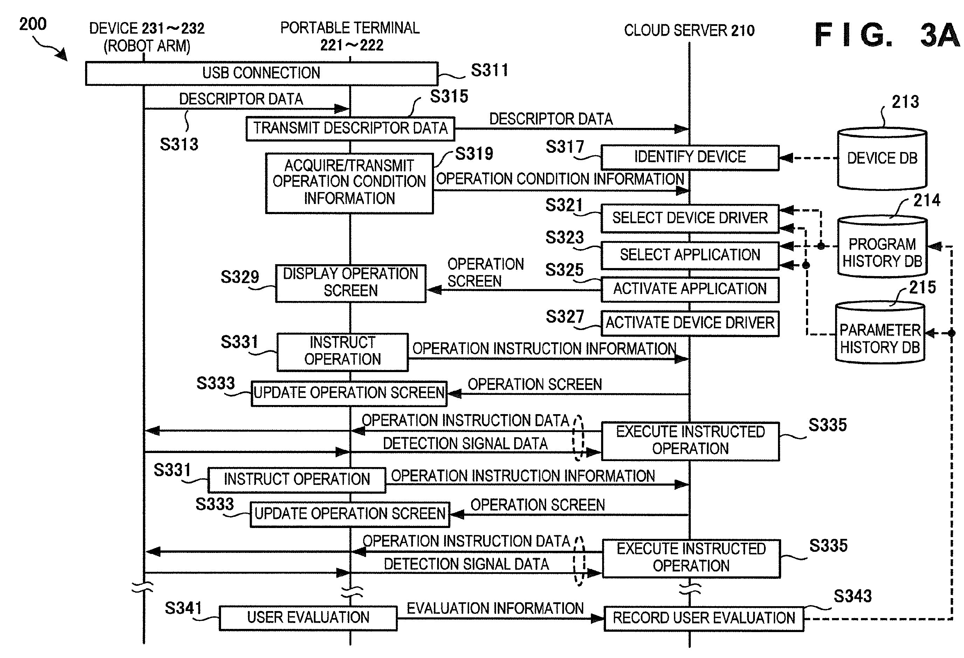

Fig. 3A is a sequence chart showing the operation procedure of the information processing system 200 according to this embodiment. Note that Fig. 3A shows a procedure when the device is USB device. The following description will be made assuming the portable terminal 220 and the device 230 for the sake of simplicity.

In step S311, the device 230 is USB-connected to the portable terminal 220. In step S313, the portable terminal 220 reads out a descriptor from the device 230 by a general-purpose USB driver. In step S315, the portable terminal 220 transmits the descriptor to the cloud server 210. In step S317, the cloud server 210 refers to the device DB 213 and specifies the connected device based on the descriptor. In step S319, the portable terminal 220 acquires operation condition information of the device 230 and transmits it to the cloud server 210. Note that acquisition of the operation condition information of the device 230 can be done by user input to the portable terminal 220 or any another method.

In step S321, the cloud server 210 refers to the program history DB 214 and selects a device driver based on the device information specified in step S317 and the received operation condition information. At the same time, the cloud server 210 refers to the parameter history DB 215 and selects parameters to be used by the device driver. In step S323, the cloud server 210 refers to the program history DB 214 and selects an application compatible with the device driver selected in step S321 based on the device information specified in step S317 and the received operation condition information. At the same time, the cloud server 210 refers to the parameter history DB 215 and selects parameters to be used by the application. Note that the device driver and the application may be selected in a reverse order or simultaneously selected as a combination.

In step S325, the cloud server 210 activates the selected application and transmits the operation screen shown in Fig. 2A to the portable terminal 220. In step S327, the cloud server 210 activates the selected device driver. In step S329, the portable terminal 220 displays the operation screen on the display. In step S331, when the user inputs an operation instruction on the operation screen, the portable terminal 220 transmits the operation instruction information to the cloud server 210. Upon receiving the operation instruction, the cloud server 210 transmits, to the portable terminal 220, screen data to display a new operation screen. In step S333, the portable terminal 220 displays an operation screen corresponding to the received screen data on the display.

In step S335, the cloud server 210 causes the device 230 to execute the instructed operation via the portable terminal 220 by the selected device driver and application. During this time, the cloud server 210 transmits operation instruction data to the device 230, and the device 230 transmits a detection signal that detects a change by the operation to the cloud server 210.

When the user inputs the next operation instruction from the portable terminal 220, steps S331 to S335 are repeated, and the next operation of the device 230 is executed by the cloud server 210 as if the portable terminal 220 operated the device. When the operation ends, a user evaluation of the device driver, application, and parameters selected by the cloud server 210 is input and transmitted to the cloud server 210 in step S341. In step S343, the cloud server 210 records the user evaluation in the program history DB 214 and the parameter history DB 215. The user evaluation is referred to later when selecting the device driver, application, and parameters.

### (USB Device Control Procedure)

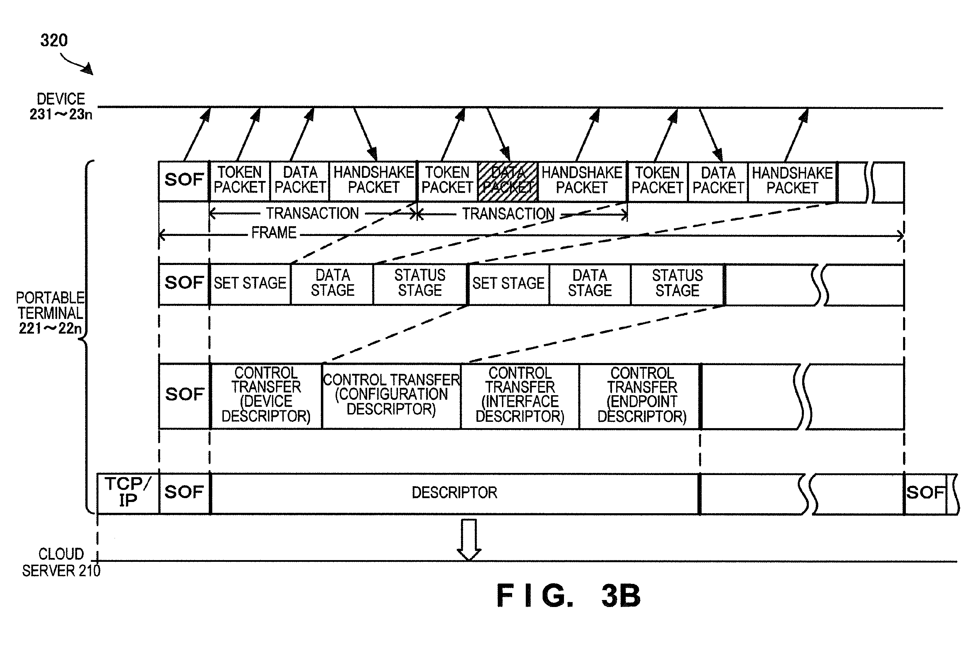

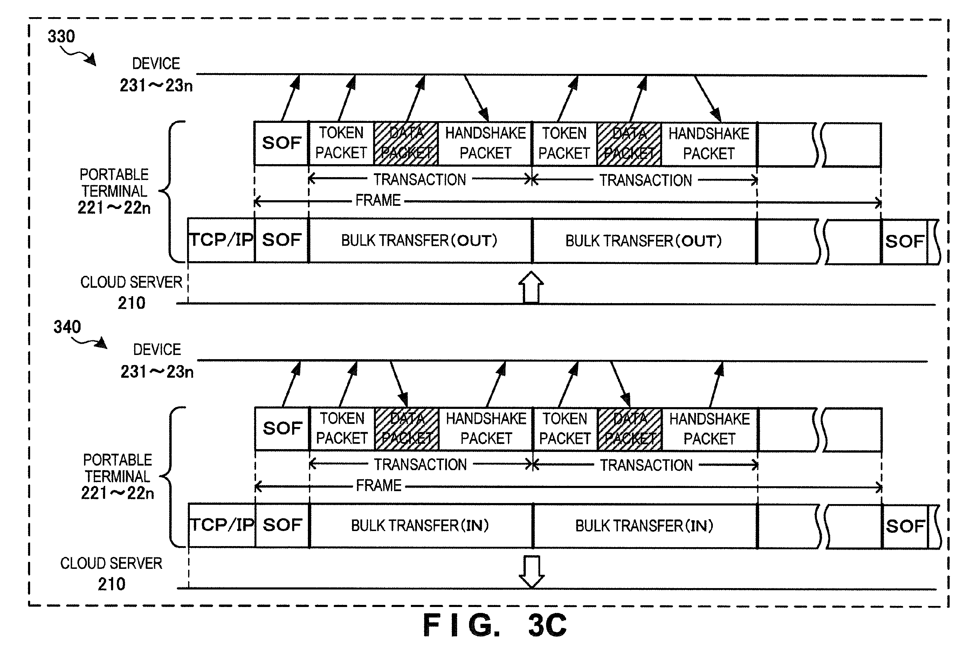

Figs. 3B and 3C are sequence charts showing the control procedure of a USB-connected USB device according to this embodiment. Note that the description will be made using the portable terminal 220 and the device 230 for the sake of simplicity.

Fig. 3B is a sequence chart showing a descriptor acquisition procedure 320 of the USB-connected USB device.

A descriptor set in the device 230 is acquired by a USB request such as GET_DESCRIPTOR. The USB request is transmitted/received to/from the device 230 by control transfer. Each control transfer includes a set stage, a data stage, and a status stage. Each stage includes a token packet, a data packet, and a handshake packet. The descriptor is acquired by the data packet of each data stage.

The descriptor acquired from the device 230 is IP-encapsulated by an IP header or TCP header and transmitted from the portable terminal 220 to the cloud server 210.

Fig. 3C is a sequence chart showing the data input/output procedure of the USB-connected USB device. The procedure includes a data output procedure 330 from the cloud server 210 to the device 230 and a data input procedure 340 from the device 230 to the cloud server 210.

In the data output procedure 330 to the device 230, first, the cloud server 210 transmits IP-encapsulated output data to the portable terminal 220. Next, the portable terminal 220 transfers the data acquired by decapsulating to the device 230 by bulk transfer (OUT). Each bulk transfer (OUT) includes a token packet, a data packet, and a handshake packet.

In the data input procedure 340 from the device 230, first, the portable terminal 220 acquires input data from the device 230 by bulk transfer (IN). Each bulk transfer (IN) includes a token packet, a data packet, and a handshake packet. Next, the portable terminal 220 transmits the IP-encapsulated input data to the cloud server 210.

### (Non-USB Device Control Procedure)

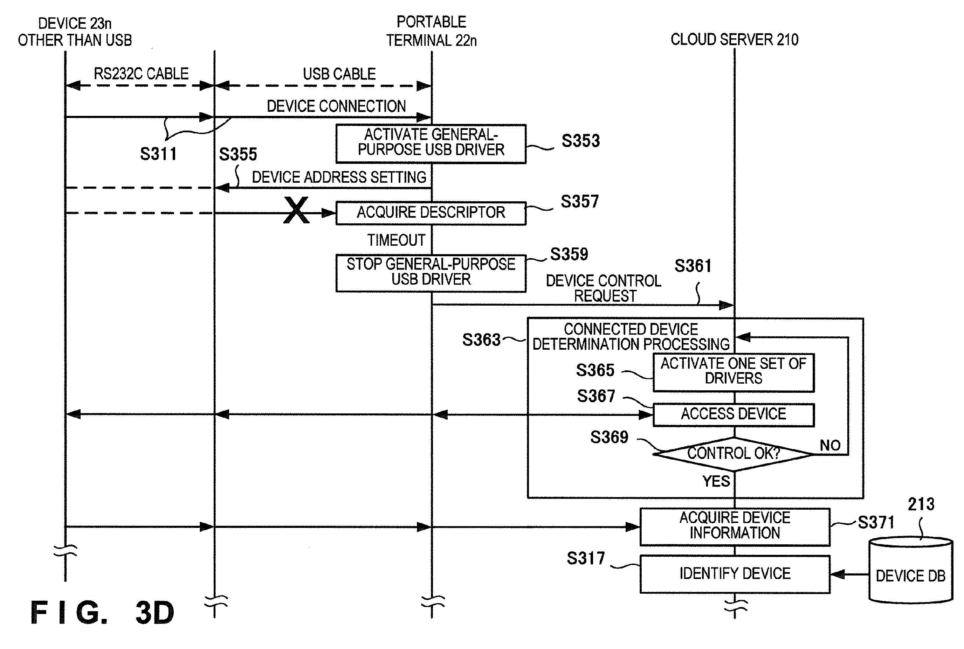

Fig. 3D is a sequence chart showing the control procedure of a device other than the USB-connected USB device according to this embodiment.

Referring to Fig. 3D, as an example in which the portable terminal 220 cannot acquire device information, a case where the device 23n is connected from an RS232C cable to a USB cable will be explained. The portable terminal 220 is assumed to have no special driver used to acquire the device information of the device 23n connected from the USB packet to the RS232C. However, the present invention is not limited to this. Note that the same step numbers as in Fig. 3A denote the same steps in Fig. 3D, and a description thereof will be omitted.

In step S311, the device 23n is connected to the portable terminal 220 by the RS232C cable and the USB cable. From step S353, the portable terminal 220 is going to acquire the descriptor of the device 23n by activating a general-purpose USB driver. However, timeout occurs in step S357 without acquiring the descriptor.

Upon detecting the timeout, the portable terminal 220 stops processing of the general-purpose USB driver in step S359. In step S361, the portable terminal 220 requests the cloud server 210 to control the connected device 23n.

Upon receiving the device control request, the cloud server 210 sequentially operates drivers capable of operating the connected device 23n and determines the connected device 23n in step S363. More specifically, in step S365, the cloud server 210 activates a set of drivers. In step S367, the cloud server 210 accesses the device 23n by the activated drivers. In step S369, the cloud server 210 determines whether the drivers can control the device 23n. Upon determining that the drivers can control the device, the device information is acquired by the drivers in step S371. The drivers include a driver capable of driving the device and a driver that implements conversion between RS232C and USB.

When the device information is acquired, the cloud server 210 refers to the device DB 213 and specifies the device 23n in step S317. The same processing as in Fig. 3A is performed from then on.

### «Functional Arrangement of Cloud Server»

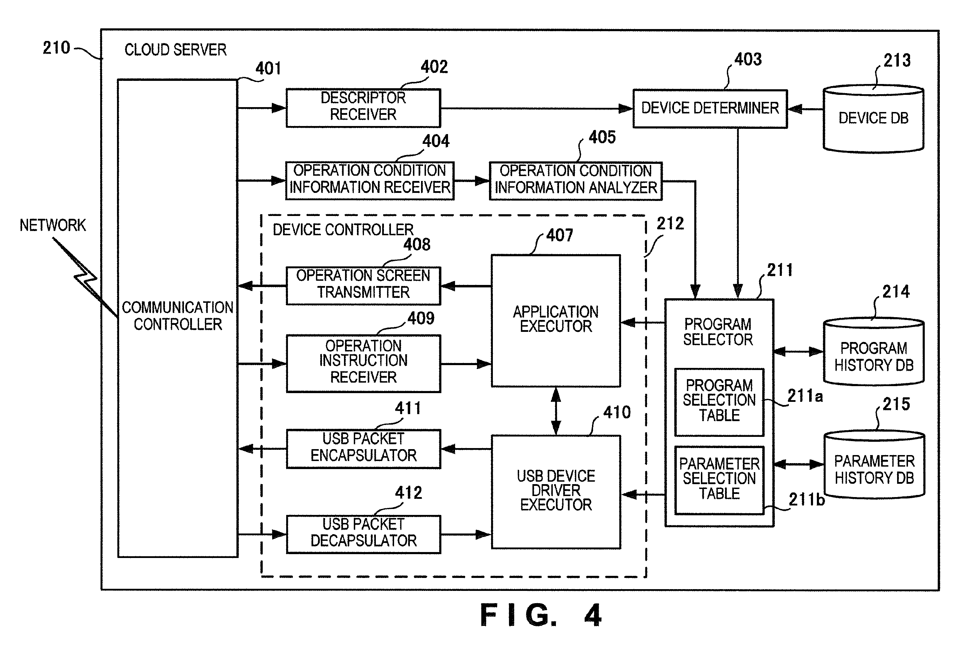

Fig. 4 is a block diagram showing the functional arrangement of the cloud server 210 according to this embodiment. Note that the following description will be made assuming the portable terminal 220 as a representative for the sake of simplicity. Components that perform user registration and the like are also included in actuality but are omitted in Fig. 4 to avoid complexity.

The cloud server 210 includes a communication controller 401 that communicates with the portable terminal 220 via the network 240. A descriptor receiver 402 receives, from a message received by the communication controller 401 from the portable terminal 220, a descriptor acquired from the device 230 connected to the portable terminal 220. A device determiner 403 refers to the device DB 213 (see Fig. 7A) and specifies the device 230 connected to the portable terminal 220 based on the descriptor of the device 230 received from the portable terminal 220. An operation condition information receiver 404 receives the operation condition information of the device 230 transmitted from the same portable terminal 220 as that has transmitted the descriptor. An operation condition information analyzer 405 analyzes the operation condition information received by the operation condition information receiver 404 and extracts or generates information necessary for program selection.

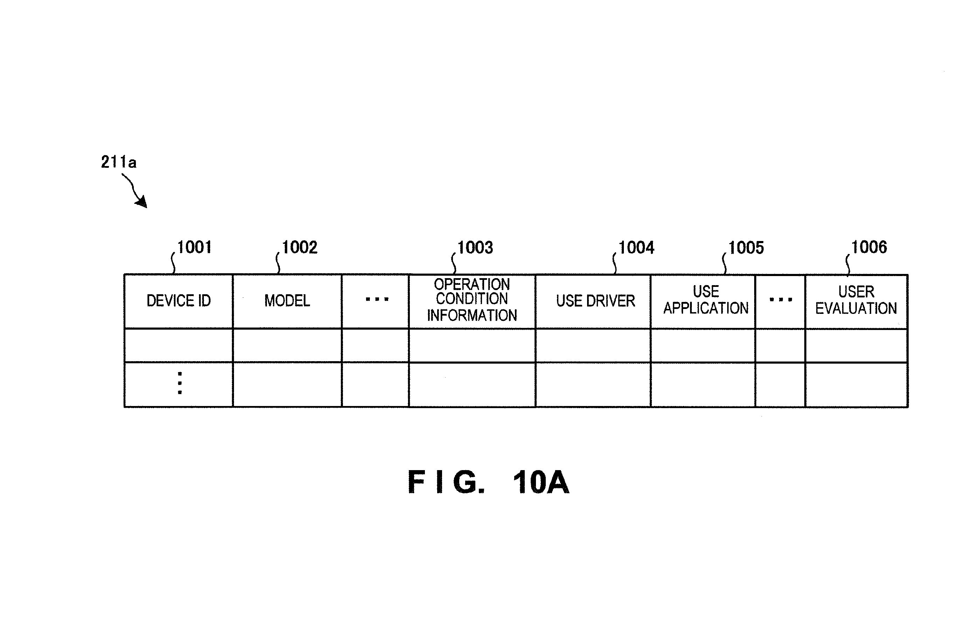

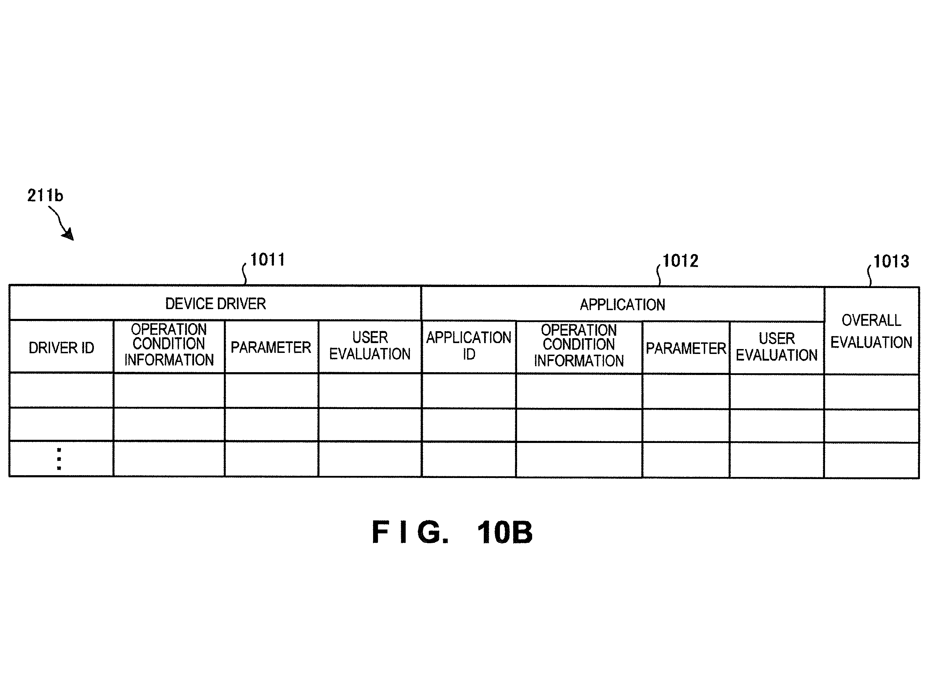

A program selector 211 includes a program selection table 211a (see Fig. 10A) and a parameter selection table 211b (see Fig. 10B). Based on the device information from the device determiner 403 and the operation condition information from the operation condition information analyzer 405, the program selector 211 refers to the program history DB 214 and the parameter history DB 215 and selects a device program, application, and parameters to be used by them.

The device controller 212 includes an application executor 407 that executes the application selected by the program selector 211. The application executor 407 generates an operation screen to be transmitted to the portable terminal 220 and transfers it to an operation screen transmitter 408. The operation screen transmitter 408 transmits the operation screen to the portable terminal 220. On the other hand, an operation instruction receiver 409 receives an operation instruction input by the user and transmitted from the portable terminal 220. The operation instruction receiver 409 transfers the received operation instruction to the application executor 407. The application executor 407 outputs an instruction for driving of the device 230 to a USB device driver executor 410 so as to operate the device 230 in accordance with the operation instruction.

The device controller 212 includes the USB device driver executor 410 that executes the device driver selected by the program selector 211. The USB device driver executor 410 generates a USB packet for the device connected to the USB connector via the portable terminal 220 and transfers it to a USB packet encapsulator 411. The USB packet encapsulator 411 IP-encapsulates the USB packet and transmits it to the portable terminal 220. On the other hand, a USB packet decapsulator 412 receives a message IP-encapsulated and transmitted from the portable terminal 220 and extracts a USB packet by decapsulating the message. The USB packet decapsulator 412 transfers the USB packet to the USB device driver executor 410. The USB device driver executor 410 analyzes the received USB packet, and generates a new USB packet and responds to the device with it, or reports the status of the device 230 to the application executor 407.

Note that Fig. 4 illustrates the descriptor receiver 402 independently of the device controller 212 for easy recognition. However, the descriptor receiver 402 may be incorporated in the device controller 212.

### «Functional Arrangement of Portable Terminal»

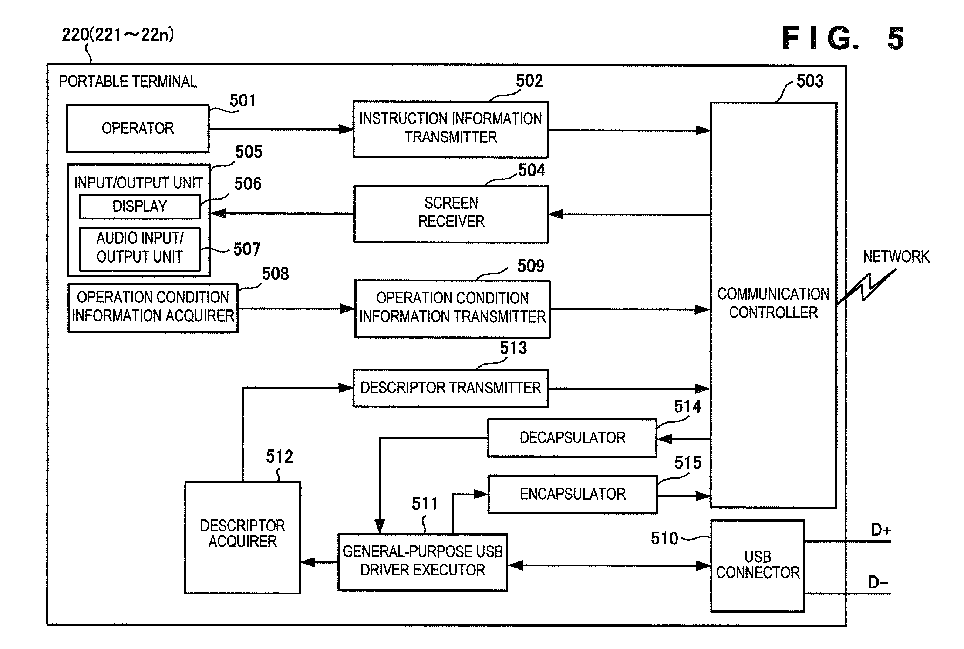

Fig. 5 is a block diagram showing the functional arrangement of the portable terminals 220 and 221 to 22n according to this embodiment. Since the portable terminals have the same arrangement, the following description will be made assuming the portable terminal 220 as a representative.

The portable terminal 220 according to this embodiment includes a communication controller 503 that controls communication with the cloud server 210 via the network. The portable terminal 220 also includes an operator 501 formed from a touch panel, a keyboard, or the like, and an input/output unit 505. The input/output unit 505 includes a display 506 that displays an instruction screen received by a screen receiver 504 from the cloud server 210, and an audio input/output unit 507 that inputs/outputs an audio.

The portable terminal 220 also includes an operation condition information acquirer 508 that acquires the operation condition of the device connected to the USB connector 510 that is a device connector. The operation condition information acquired by the operation condition information acquirer 508 is transmitted to the cloud server 210 by an operation condition information transmitter 509 included in an operation information transmitter. Note that the operation condition information acquirer 508 may be included in the operator 501.

The portable terminal 220 also includes a USB connector 510 used to connect a USB device. The portable terminal 220 further includes a general-purpose USB driver executor 511 configured to acquire the descriptor of the device 230 connected to the USB connector 510. The portable terminal 220 also includes a descriptor acquirer 512 configured to acquire the descriptor of the device 230 from a USB packet acquired by the general-purpose USB driver executor 511. The portable terminal 220 also includes a descriptor transmitter 513 that is a device information transmitter and transmits the descriptor of the device 230 acquired by the descriptor acquirer 512 to the cloud server 210.

The portable terminal 220 additionally includes a decapsulator 514 and an encapsulator 515 which are necessary for USB packet exchange via the general-purpose USB driver executor 511 between the cloud server 210 and the device 230 connectable to the USB connector 510. The decapsulator 514 decapsulates an IP message from the cloud server 210. The encapsulator 515 performs IP-encapsulation to the cloud server 210. The general-purpose USB driver executor 511, the decapsulator 514, and the encapsulator 515 constitute a device control relay unit that relays device control of the cloud server 210.

### «Functional Arrangement of Device (Industrial Device)»

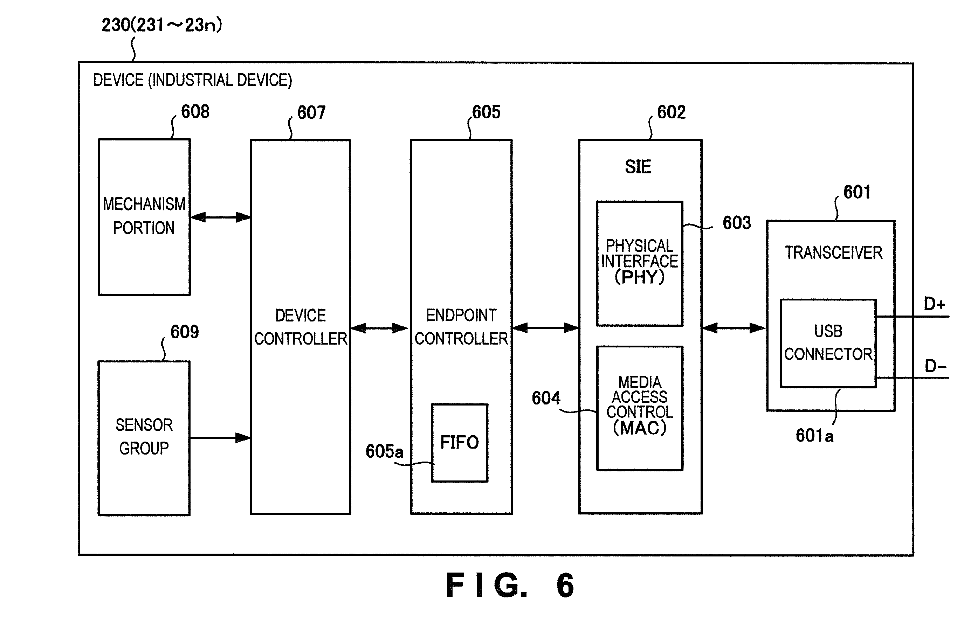

Fig. 6 is a block diagram showing the functional arrangement of the device (industrial device) 230 according to this embodiment. Note that the arrangement shown in Fig. 6 shows a general arrangement necessary for USB connection, and the arrangement is not limited to this. Note that for further information, see USB specifications.

The device 230 includes a transceiver 601 having a USB connector 601a that is connected to the USB connector 510 of the portable terminal 220 by a USB cable. An SIE (Serial Interface Engine) 602 includes a physical interface (PHY) 603 and a media access control (MAC) 604 and controls the protocol of USB packet exchange. Data including a descriptor to be transmitted/received by the SIE 602 is held by an endpoint controller 605 including a FIFO 605a.

A device controller 607 controls a mechanism portion 608 and a sensor group 609 of the device 230 that is a robot arm in this embodiment in accordance with the data held by the FIFO 605a of the endpoint controller 605.

### (Device DB)

Fig. 7A is a view showing the arrangement of the device DB 213 according to this embodiment. Note that the device DB 213 is not limited to the arrangement shown in Fig. 7A.

The device DB 213 stores a device ID 712, a model 713 of the device, a version 714 of the device, and a capability 715 of the device in association with a device descriptor 711. The device descriptor 711 includes a device class, a device subclass, a vendor ID, a product ID, a serial number, and the like.

### (Device Descriptor)

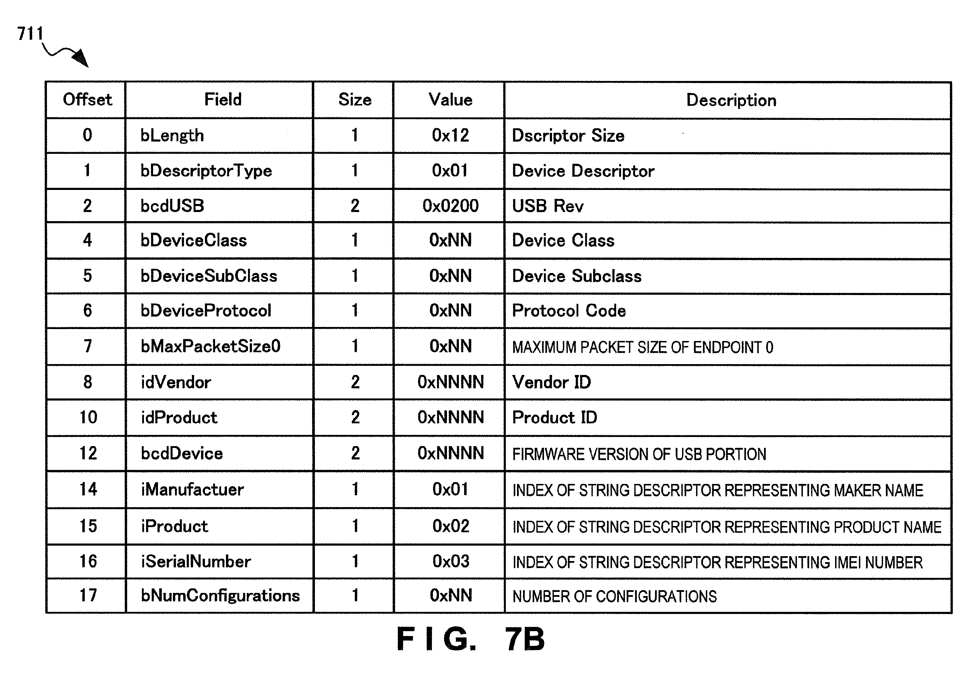

Fig. 7B is a view showing the arrangement of the device descriptor 711 according to this embodiment. A description of details will be omitted. See USB specifications.

For example, "4" of Offset is the device class, "5" is the device subclass, "8" is the vendor ID, "10" is the product ID, and "16" is the serial number. With these pieces of information, each device 230 connected to the USB connector is uniquely specified. Note that the device descriptor 711 is stored in an area of endpoint0 allocated in advance.

### (Program History DB)

Fig. 8A is a view showing the arrangement of the program history DB 214 according to this embodiment. Note that the program history DB 214 is not limited to the arrangement shown in Fig. 8A.

The program history DB 214 stores a plurality of pieces of operation condition information 815 in association with device information such as a device ID 811, a model 812 of the device, a version 813, and a capability 814. A use driver 816 and a use application 817 are stored in association with each operation condition information 815, and a user evaluation 818 input by the user is stored in correspondence with them.

### (Parameter History DB)

Fig. 8B is a view showing the arrangement of the parameter history DB 215 according to this embodiment. Note that the parameter history DB 215 is not limited to the arrangement shown in Fig. 8B.

The parameter history DB 215 includes a driver parameter storage 820 that stores parameters used by drivers, and an application parameter storage 830 that stores parameters used by applications.

The driver parameter storage 820 stores a first parameter 823, a second parameter 824,..., an nth parameter 825 to be used in association with a driver ID 821 and each of a plurality of pieces of operation condition information 822. A user evaluation 826 input by the user for reference at the time of driver selection is stored.

The application parameter storage 830 stores a universal parameter 834, a first sequence parameter 835, a second sequence parameter 836,..., an nth sequence parameter 837 to be used in association with an application ID 831, each of a plurality of pieces of operation condition information 832, and a different operation sequence 833. A user evaluation 838 input by the user for reference at the time of application selection is stored.

### «Hardware Arrangement of Cloud Server»

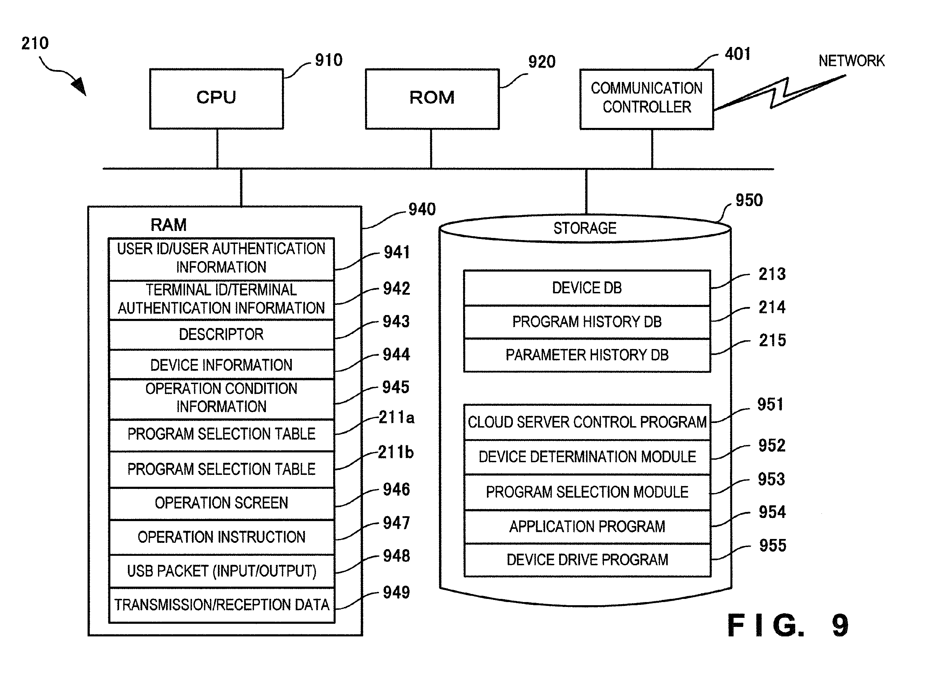

Fig. 9 is a block diagram showing the hardware arrangement of the cloud server 210 according to this embodiment.

Referring to Fig. 9, a CPU (Central Processing Unit) 910 is a processor for arithmetic control, and implements each functional component of the cloud server 210 shown in Fig. 4 by executing a program. A ROM (Read Only Memory) 920 stores initial data, permanent data of programs and the like, and programs. The communication controller 401 is a communication controller, and in this embodiment, communicates with the portable terminals 220 and 221 to 22n via the network 240. Note that the number of CPUs 910 is not limited to one, and the CPU 910 may include a plurality of CPUs or a GPU (Graphics Processing Unit) for image processing.

A RAM (Random Access Memory) 940 is a random access memory used by the CPU 910 as a work area for temporary storage. An area to store data necessary for implementation of the embodiment is allocated to the RAM 940. User ID/user authentication information 941 includes the identifier and authentication information of a user under communication. Terminal ID/terminal authentication information 942 includes the identifier and authentication information of a portable terminal under communication. A descriptor 943 is a device descriptor acquired by the portable terminal from the device connected to the portable terminal and transmitted to the cloud server 210. Device information 944 is information that specifies the device by referring to the device DB 213 based on the descriptor 943. Operation condition information 945 is information about the operation condition of the device received from the portable terminal. The program selection table 211 a is a table used to select a program to be used based on the device information 944 and the operation condition information 945. The parameter selection table 211b is a table used to select parameters to be used based on the device information 944 and the operation condition information 945. An operation screen 946 is data of an operation screen to be transmitted to the portable terminal and displayed on the display screen. An operation instruction 947 is data received from the portable terminal, which corresponds to an operation instruction input by the user to the operation screen displayed on the portable terminal. A USB packet (input/output) 948 is packet data to be transmitted/received to/from the USB device via the portable terminal. Transmission/reception data 949 is IP-encapsulated data to be transmitted/received to/from the portable terminal via the communication controller 401.

A storage 950 stores databases, various kinds of parameters, and following data and programs necessary for implementation of the embodiment. The device DB 213 is the database shown in Fig. 7A. The program history DB 214 is the database shown in Fig. 8A. The parameter history DB 215 is the database shown in Fig. 8B.

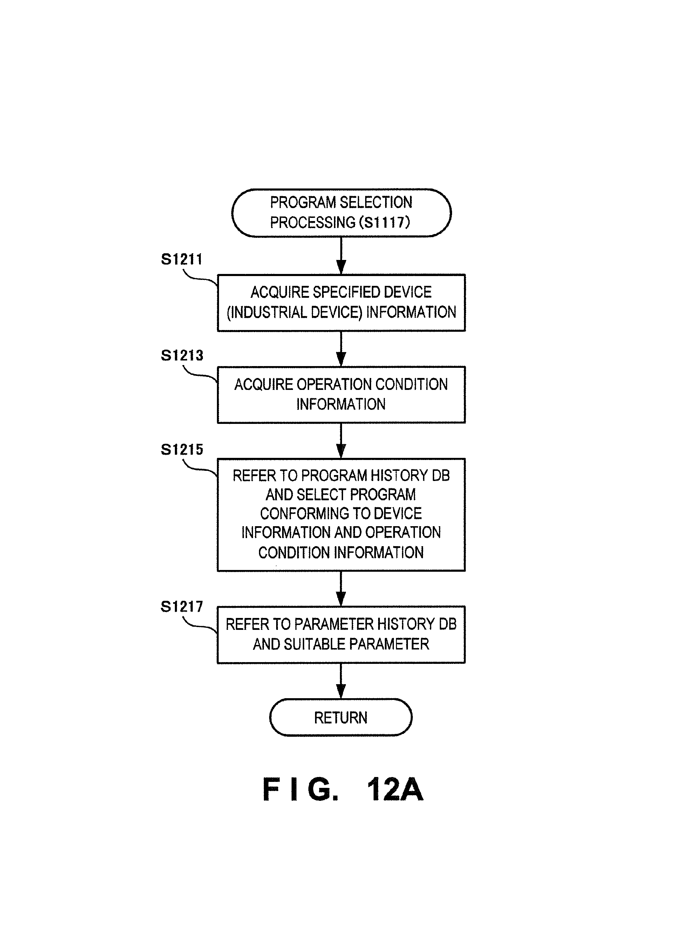

The storage 950 stores the following programs. A cloud server control program 951 is a program that controls the entire cloud server 210. A device determination module 952 is a module that specifies a device from the descriptor of the device connected to the portable terminal in the cloud server control program 951. A program selection module 953 is a module that selects a program and parameters appropriate to operate the connected device by referring to the program history DB 214 and the parameter history DB 215 in the cloud server control program 951 (see Fig. 12A). An application program 954 is a program selected by the program selection module 953. A device drive program 955 is a program selected by the program selection module 953.

Note that data and programs associated with general-purpose functions and other implementable functions of the cloud server 210 are not shown in the RAM 940 or the storage 950 of Fig. 9.

### (Program Selection Table)

Fig. 10A is a view showing the arrangement of the program selection table 211 a according to this embodiment. The program selection table 211 a is a table used to select a program based on device information and operation condition information.

The program selection table 211a stores a use driver 1004 and a use application 1005 selected based on device information such as a device ID 1001 and a model 1002 and operation condition information 1003, and a user evaluation 1006 input by the user.

### (Parameter Selection Table)

Fig. 10B is a view showing the arrangement of the parameter selection table 211b according to this embodiment. The parameter selection table 211b is a table used to select parameters based on a selected driver or application and operation condition information.

The parameter selection table 211b includes a device driver table 1011 that stores a parameter and a user evaluation based on a selected driver ID and operation condition information. The parameter selection table 211b also includes an application table 1012 that stores a parameter and a user evaluation based on a selected application ID and operation condition information. The parameter selection table 211b stores an overall evaluation 1013 for the combination of the parameter of the device driver and that of the application.

### «Processing Procedure of Cloud Server»

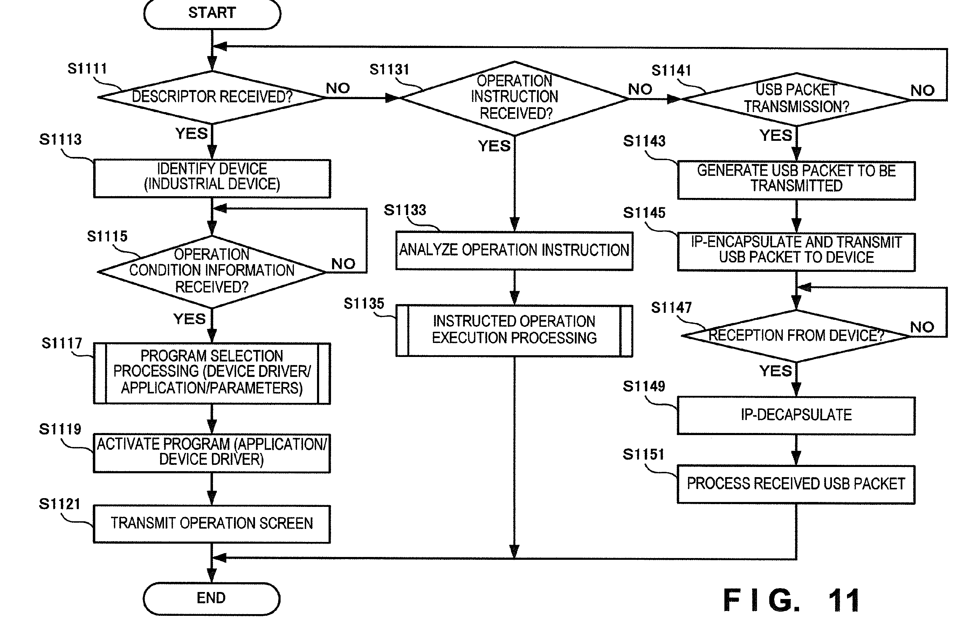

Fig. 11 is a flowchart showing the processing procedure of the cloud server 210 according to this embodiment. This flowchart is executed by the CPU 910 shown in Fig. 9 using the RAM 940 and implements the functional components shown in Fig. 4.

In step S1111, the cloud server 210 determines whether the descriptor of a connected device is received from the portable terminal. If the descriptor of the connected device is not received, the cloud server 210 determines in step S1131 whether an operation instruction from the portable terminal is received. If neither the descriptor of the device nor an operation instruction is received, the cloud server 210 determines in step S1141 whether to transmit a USB packet to the device via the portable terminal.

Upon receiving the descriptor of the device, the cloud server 210 advances to step S1113, refers to the device DB 213, and specifies the device (in this embodiment, a robot arm that is an industrial device). In step S1115, the cloud server 210 waits for reception of operation condition information from the portable terminal. Upon receiving operation condition information, the cloud server 210 advances to step S1117 and performs program selection processing (see Fig. 12A). In step S1119, the cloud server 210 activates the selected program using selected parameters. In step S1121, the application activated by the cloud server 210 transmits an operation screen to the portable terminal.

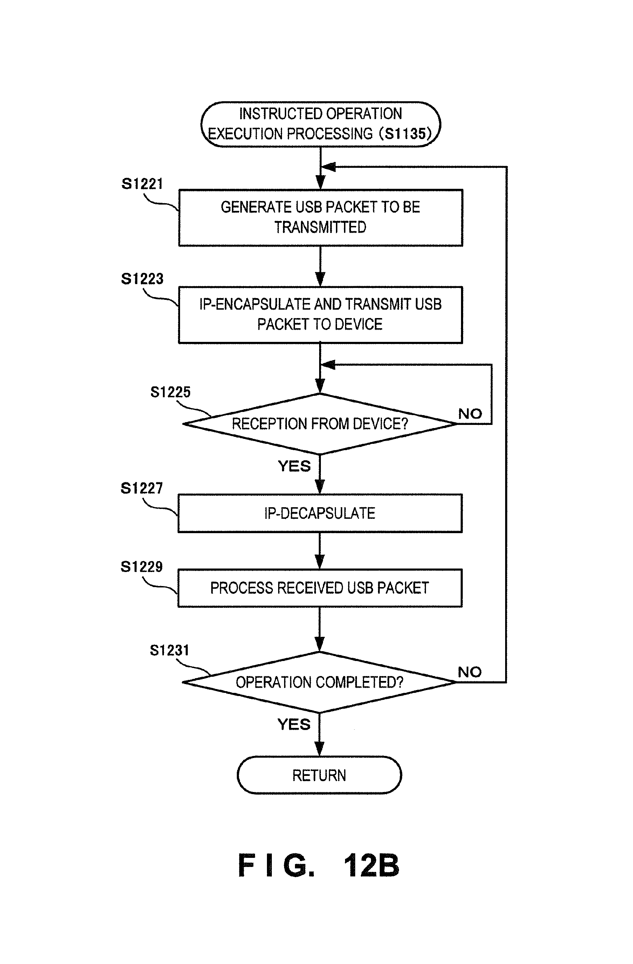

Upon receiving an operation instruction, the cloud server 210 advances to step S1133 and analyzes the received operation instruction. The cloud server 210 then performs execution processing of the instructed operation corresponding to the analysis result (see Fig. 12B).

To transmit a USB packet to the device, the cloud server 210 advances to step S 1143 and generates a USB packet to be transmitted. In step S 1145, the cloud server 210 IP-encapsulates the USB packet and transmits it to the device. In step S 1147, the cloud server 210 waits for reception of a response from the device. Upon receiving a response, the process advances to step S1149. In step S1149, the cloud server 210 IP-decapsulates the received data and extracts a USB packet. In step S 1151, the cloud server 210 processes the extracted USB packet.

### (Program Selection Processing)

Fig. 12A is a flowchart showing the processing procedure of program selection processing S1117 according to this embodiment.

In step S1211, the cloud server 210 acquires the device information specified in step S1113. In step S1213, the cloud server 210 acquires the operation condition information received in step S1115. In step S1215, the cloud server 210 refers to the program history DB 214 and selects a program conforming to the device information and the operation condition information. In step S1217, the cloud server 210 refers to the parameter history DB 215 and selects suitable parameters to be used by the selected program.

### (Instructed Operation Execution Processing)

Fig. 12B is a flowchart showing the processing procedure S1135 of instructed operation execution processing according to this embodiment.

In step S1221, the cloud server 210 generates a USB packet to be transmitted. In step S1223, the cloud server 210 IP-encapsulates the USB packet and transmits it to the device. In step S1225, the cloud server 210 waits for reception of a response from the device. Upon receiving a response, the process advances to step S1227. In step S1227, the cloud server 210 IP-decapsulates the received data and extracts a USB packet. In step S1229, the cloud server 210 processes the extracted USB packet. In step S1231, the cloud server 210 determines whether the instructed operation is completed. If the instructed operation is not completed, the cloud server 210 returns to step S1221 and continues the processing. If the instructed operation is completed, the cloud server 210 returns.

### <<Hardware Arrangement of Portable Terminal>>

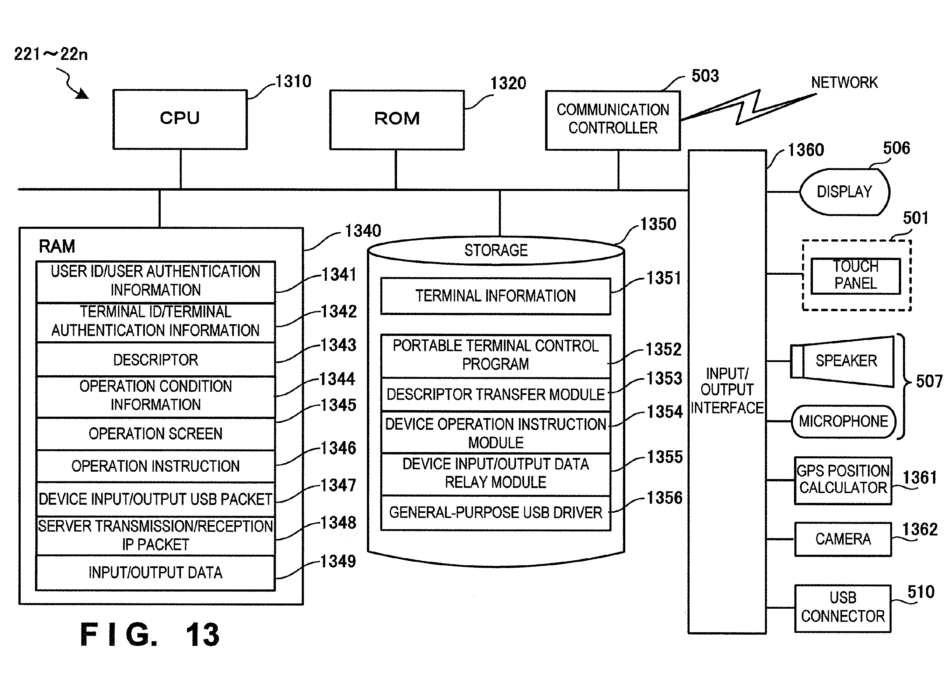

Fig. 13 is a block diagram showing the hardware arrangement of the portable terminals 220 and 221 to 22n according to this embodiment. The following description will be made assuming the portable terminal 220 as a representative.

Referring to Fig. 13, a CPU 1310 is a processor for arithmetic control, and implements each functional component of the portable terminal 220 shown in Fig. 5 by executing a program. A ROM 1320 stores initial data, permanent data of programs and the like, and programs. The communication controller 503 is a communication controller, and in this embodiment, communicates with the cloud server 210 via the network. Note that the number of CPUs 1310 is not limited to one, and the CPU 1310 may include a plurality of CPUs or a GPU for image processing.

A RAM 1340 is a random access memory used by the CPU 1310 as a work area for temporary storage. An area to store data necessary for implementation of the embodiment is allocated to the RAM 1340. User ID/user authentication information 1341 includes the identifier and authentication information of a user who is using the portable terminal 220. Terminal ID/terminal authentication information 1342 includes the identifier and authentication information of the portable terminal 220. A descriptor 1343 is device information read out from a device connected to the USB connector 510. Operation condition information 1344 is information about the operation condition of the device acquired by the portable terminal 220. An operation screen 1345 is display data used to operate the device 230, which is received from the cloud server 210. An operation instruction 1346 is data of an operation instructed by the user on the operation screen displayed on the display 506. A device input/output USB packet 1347 is a packet to be input/output to/from the USB device. A server transmission/reception IP packet 1348 is an IP-encapsulated packet to be transmitted/received to/from the cloud server 210 via the communication controller 503. Input/output data 1349 is input/output data to be input/output via an input/output interface 1360.

A storage 1350 stores databases, various kinds of parameters, and following data and programs necessary for implementation of the embodiment. Terminal information 1351 is information including the identifier of the portable terminal. The storage 1350 stores the following programs. A portable terminal control program 1352 is a control program that controls the entire portable terminal 220. A descriptor transfer module 1353 is a module that transfers a descriptor acquired from the device 230 to the cloud server 210 in the portable terminal control program 1352. A device operation instruction module 1354 is a module configured to send an operation instruction of the device 230 to the cloud server 210. A device input/output data relay module 1355 is a module that relays data input/output between the cloud server 210 and the device 230. A general-purpose USB driver 1356 is a program that executes a basic USB protocol such as descriptor read of the device 230.

The input/output interface 1360 interfaces input/output data from/to input/output devices. The display 506 and the operator 501 formed from a touch panel or the like are connected to the input/output interface 1360. The audio input/output unit 507 such as a speaker and a microphone is also connected. In addition, a GPS (Global Positioning System) position generator 1361, a camera 1362, and the like are connected. The USB connector 510 is also connected.

Note that data and programs associated with general-purpose functions and other implementable functions of the portable terminals 220 and 221 or 22n are not shown in the RAM 1340 or the storage 1350 of Fig. 13.

### «Processing Procedure of Portable Terminal»

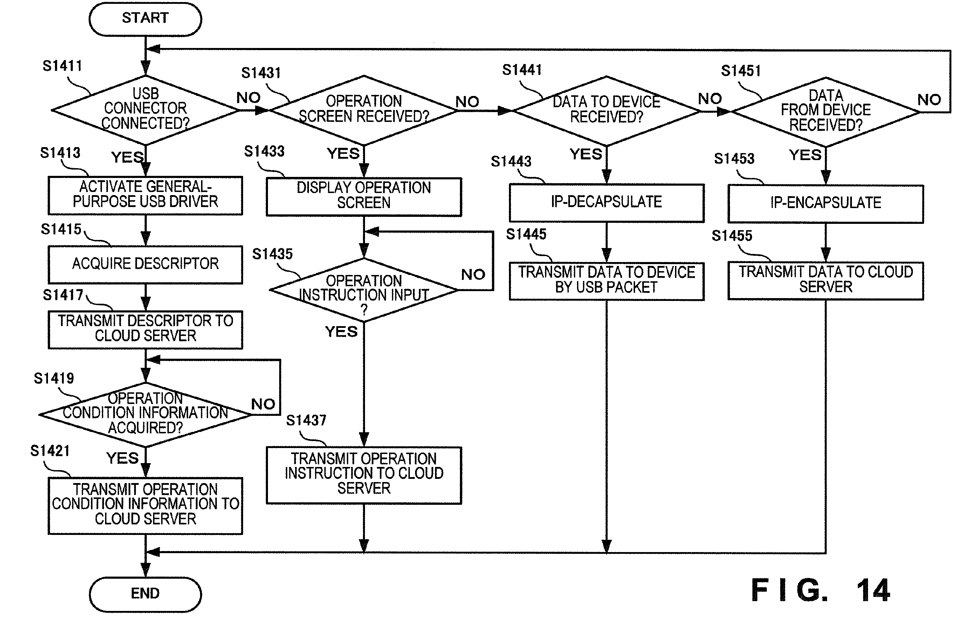

Fig. 14 is a flowchart showing the processing procedure of the portable terminals 220 and 221 to 22n according to this embodiment. This flowchart is executed by the CPU 1310 shown in Fig. 13 using the RAM 1340 and implements the functional components shown in Fig. 5. The following description will be made assuming the portable terminal 220 as a representative.

In step S 1411, the portable terminal 220 determines whether a device is connected to the USB connector. If no device is connected to the USB connector, the portable terminal 220 determines in step S1431 whether an operation screen is received from the cloud server 210. If neither device connection to the USB connector nor reception of an operation screen is done, the portable terminal 220 determines in step S1441 whether data to the device is received from the cloud server 210. If none of device connection to the USB connector, reception of an operation screen, and reception of data to the device is done, the portable terminal 220 determines in step S 1451 whether data from the device is received.

If a device is connected to the USB connector, the portable terminal 220 advances to step S1413 and activates a general-purpose USB drive. In step S1415, the portable terminal 220 acquires the descriptor of the device. In step S1417, the portable terminal 220 transmits the acquired descriptor to the cloud server 210. In step S1419, the portable terminal 220 waits for acquisition of operation condition information. Upon acquiring operation condition information, the portable terminal 220 advances to step S 1421 and transmits the acquired operation condition information to the cloud server 210.

Upon receiving an operation screen, the portable terminal 220 advances to step S 1433 and displays the operation screen on the display 506. In step S1435, the portable terminal 220 waits for operation input by the user. If an operation is input by the user, the portable terminal 220 advances to step S1437 and transmits the operation instruction to the cloud server 210.

Upon receiving data to the device, the portable terminal 220 advances to step S 1443 and IP-decapsulates the received IP-encapsulated data. In step S1445, the portable terminal 220 transmits a USB packet to the device. On the other hand, upon receiving data from the device, the portable terminal 220 advances to step S 1453 and IP-encapsulates the received USB packet. In step S 1455, the portable terminal 220 transmits the IP packet to the cloud server 210.

According to this embodiment, when a device is connected to the portable terminal, the information processing apparatus (server or the like) controls the device based on device information and operation condition information. It is therefore possible to control the device from the information processing apparatus in conformity with the operation condition of the device acquired by the portable terminal.

### [Third Embodiment]

An information processing system according to the third embodiment of the present invention will be described next. The information processing system according to this embodiment is different from the second embodiment in that a portable terminal transmits a video captured by a camera to a cloud server. The cloud server selects a device driver program, application program, and various kinds of parameters to be used in these programs by determining not only operation condition information but also operation state information representing an actual operation state from the received video. The rest of the components and operations is the same as in the second embodiment. Hence, the same reference numerals denote the same components and operations, and a detailed description thereof will be omitted.

According to this embodiment, the operation condition of an industrial device is acquired by a simple user operation, that is, video acquisition from the camera of the portable terminal. This makes it possible to control each device from an information processing apparatus (server or the like) in conformity with the operation condition of the industrial device and also by determining the operation state from an actual motion.

Note that in this embodiment, a video representing the operation condition of a device or the video of an operation state of a device will be exemplified. However, for example, if the operation state of a device can be monitored by a sound generated when the device operates, the portable terminal may be configured to pick up the sound generated by the device and send it to a cloud server 1510. Additionally, in this embodiment, a case where it is verified whether program change during an operation is necessary will be described. However, for example, this embodiment is applicable to a program change instruction by the user when setting change or operation change of the device is necessary before an initial operation or during an operation.

### «Information Processing System»

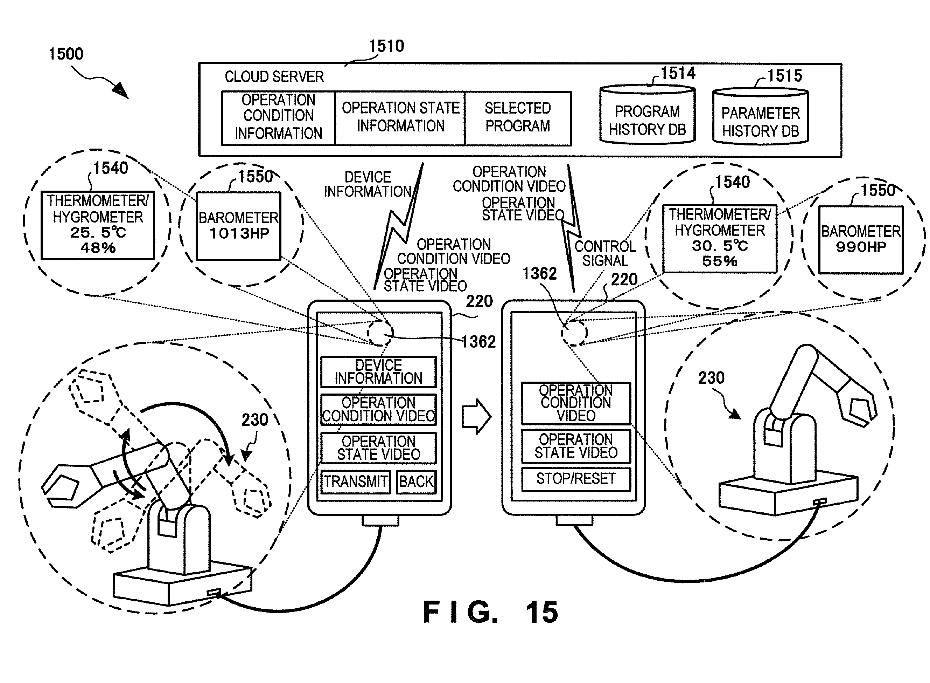

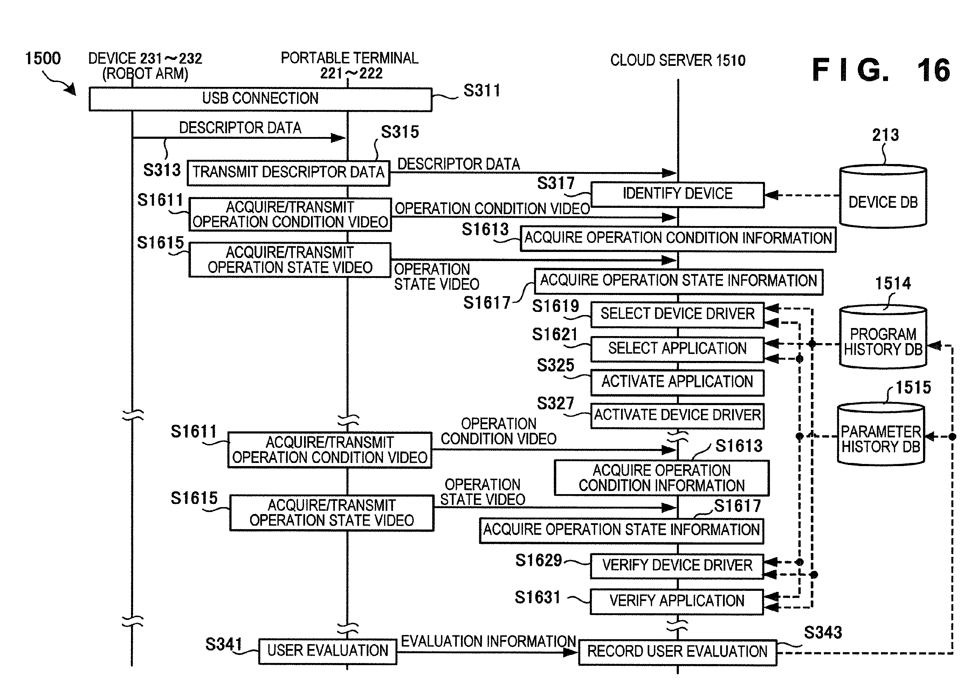

The operation of an information processing system 1500 according to this embodiment will be described with reference to Figs. 15 and 16.

### (Operation Concept)

Fig. 15 is a view for explaining the operation concept of the information processing system 1500 according to this embodiment.

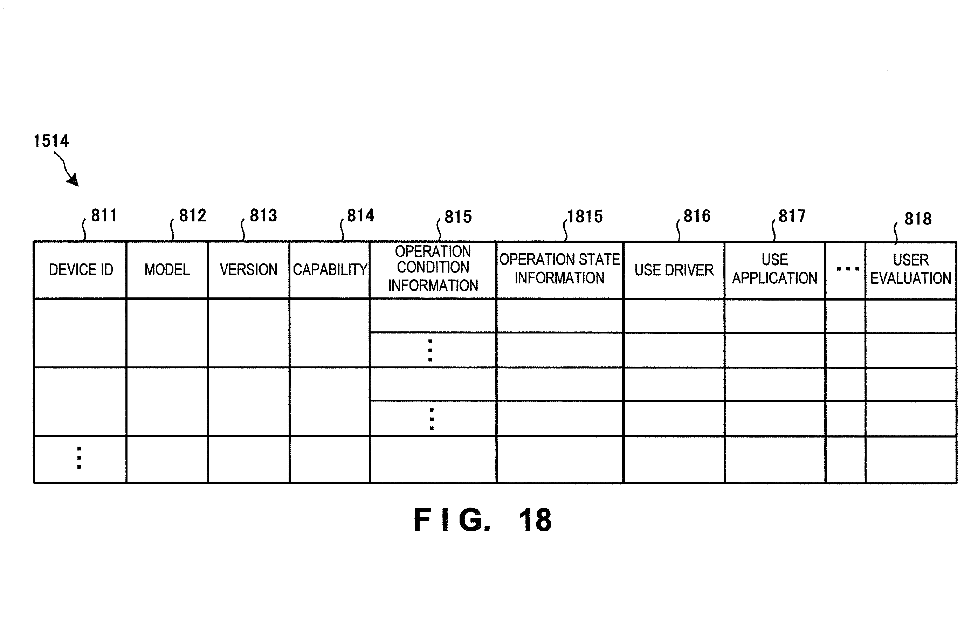

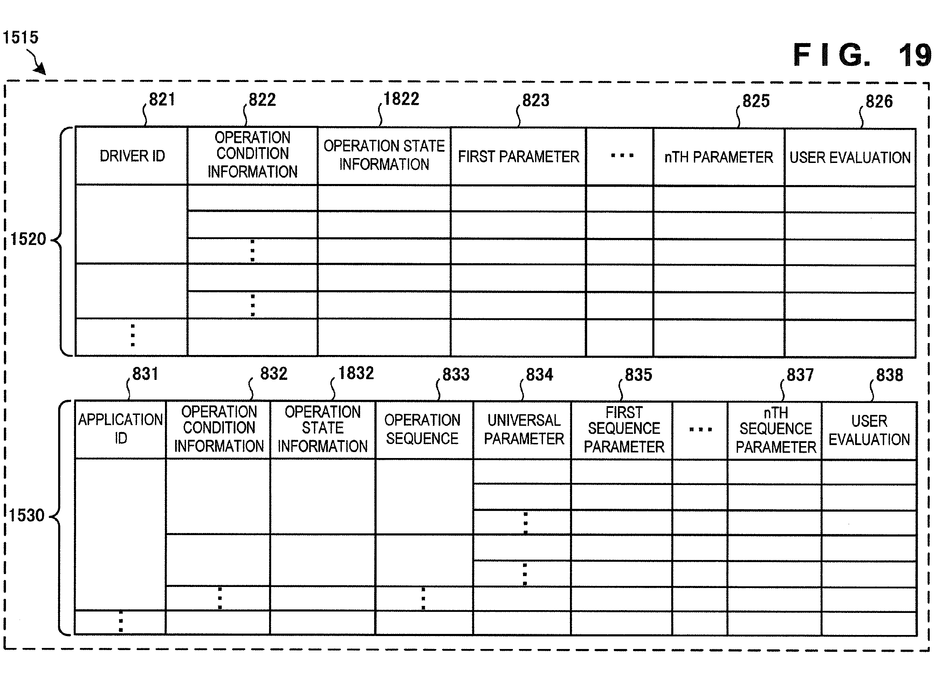

In the information processing system 1500, the cloud server 1510 receives a video captured by a camera 1362 of a portable terminal 220 and acquires, from the video, operation condition information (temperature/humidity or atmospheric pressure in Fig. 15) of a robot arm 230 or operation state information that is an actual operation state. A program is selected or changed based on the operation condition information or operation state information, and the operation of the robot arm 230 that is an industrial device connected to the USB connector of the portable terminal 220 is controlled. Note that a video to acquire operation condition information will be referred to as an operation condition video, and a video to acquire operation state information will be referred to as an operation state video hereinafter. The cloud server 1510 includes a program history DB 1514 (see Fig. 18) and a parameter history DB 1515 (see Fig. 19) corresponding to this embodiment. Note that program selection is done based on operation condition information or operation state information at the start of control, and program change is done based on operation condition information or operation state information after the start of control.

In Fig. 15, the left view shows the initial state of the robot arm 230. The portable terminal 220 acquires the device information (descriptor) of the robot arm 230 connected to the USB connector. In addition, the portable terminal 220 acquires an operation condition video by capturing a thermometer/hygrometer 1540 or a barometer 1550 by the camera 1362. Note that the operation condition video is not limited to the video of a measuring instrument. A video around the robot arm 230 can represent the operation condition at the time of an accident or disaster. A video obtained by capturing a scene outside a window can represent the weather or the like of an operation condition. A video of the user can also be used. On the other hand, the portable terminal 220 acquires an operation state video by capturing the initial operation of the robot arm 230 by the camera 1362. The portable terminal 220 transmits the acquired device information, operation condition video, and operation state video to the cloud server 1510 via a network in correspondence with a user instruction from the operation screen.

The cloud server 1510 analyzes the operation condition video and the operation state video and generates operation condition information and operation state information. Based on the received device information, operation condition information, and operation state information, the cloud server 1510 refers to the program history DB 1514 and the parameter history DB 1515 and selects a device driver that operates the robot arm 230, an application, and parameters thereof.

The right view of Fig. 15 shows the state of the robot arm 230 during an operation. The portable terminal 220 acquires an operation condition video by capturing the thermometer/hygrometer 1540 or the barometer 1550 by the camera 1362, and monitors a change in the operation condition. Note that the video is not limited to the video of a measuring instrument, as described above. On the other hand, the portable terminal 220 acquires an operation state video by capturing the operation of the robot arm 230 by the camera 1362 and monitors a change in the operation. Note that the operation state video is not limited to the video of the robot arm 230. For example, if the device is a manufacturing device, the operation of the manufacturing device can be monitored by a video of the product. Alternatively, a heat generation state, the intensity of generated light, colors, or the like can be monitored by a video. The portable terminal 220 transmits the acquired device information, operation condition video, and operation state video to the cloud server 1510 via the network in correspondence with a user instruction from the operation screen.

The cloud server 1510 analyzes the operation condition video and the operation state video and generates current operation condition information and current operation state information. Based on the stored device information, the current operation condition information, and the current operation state information, the cloud server 1510 refers to the program history DB 1514 and the parameter history DB 1515, and if the program or parameters need to be changed, changes the device driver that operates the robot arm 230, the application, and the parameters thereof by reselecting them.

### (Operation Procedure)

Fig. 16 is a sequence chart showing the operation procedure of the information processing system 1500 according to this embodiment. Note that the same step numbers as in Fig. 3A denote the same steps, and a description thereof will be omitted. The following description will be made assuming the portable terminal 220 and the device 230 as a representative.

In step S1611, the portable terminal 220 acquires an operation condition video by the camera 1362 and transmits it to the cloud server 1510. In step S1613, the cloud server 1510 acquires operation condition information from the received operation condition video. Next, the portable terminal 220 acquires an operation state video by the camera 1362 and transmits it to the cloud server 1510. In step S1617, the cloud server 1510 acquires operation state information from the received operation state video. In step S1619, the cloud server 1510 refers to the program history DB 1514 and the parameter history DB 1515 and selects a device driver and parameters to be used based on the connected device information, the operation condition information, and the operation state information. In step S1621, the cloud server 1510 refers to the program history DB 1514 and the parameter history DB 1515 and selects an application and parameters to be used based on the connected device information, the operation condition information, and the operation state information. Then, the operation of the device 230 starts. Fig. 16 illustrates the characteristic portions of this embodiment but not details of the operation (see Fig. 3A).

During the operation of the device 230, steps S1611 to S1617 are performed again, and the cloud server 1510 acquires current operation condition information and current operation state information. In step S1629, the cloud server 1510 verifies, based on the acquired current operation condition information and current operation state information, whether the selected device driver and the parameters thereof are appropriate. At the same time, in step S1631, the cloud server 1510 verifies whether the selected application and the parameters thereof are appropriate. If selection needs to be redone based on the result of verification, the cloud server 1510 redoes the selection by referring to the program history DB 1514 and the parameter history DB 1515 again. Note that the program reselection may be prohibited if it is necessary to simply change the order of sequence or adjust the parameters.

### «Functional Arrangement of Cloud Server»

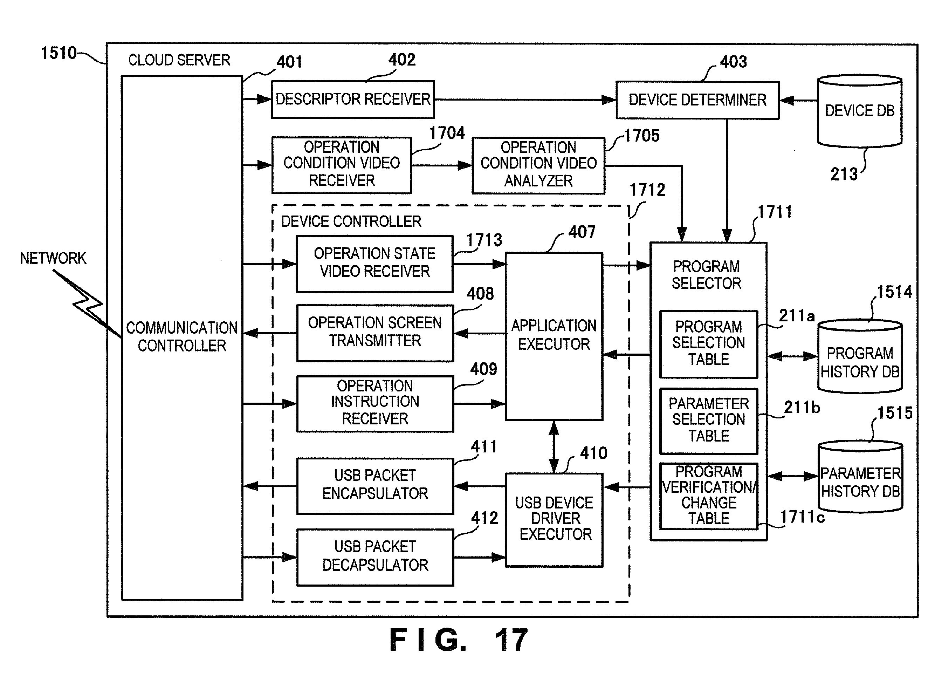

Fig. 17 is a block diagram showing the functional arrangement of the cloud server 1510 according to this embodiment. Note that the same reference numbers as in Fig. 4 of the second embodiment denote the same parts in Fig. 17, and a description thereof will be omitted.

An operation condition video receiver 1704 receives a video concerning the operation condition of the device 230 transmitted from the portable terminal 220. An operation condition video analyzer 1705 analyzes the operation condition video received by the operation condition video receiver 1704 and acquires operation condition information.

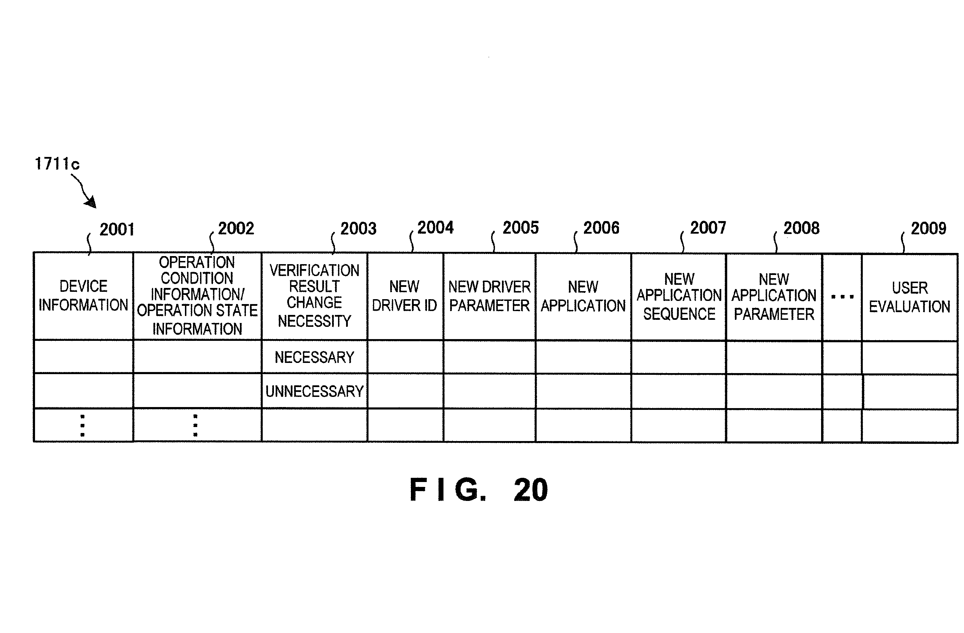

Based on the device information, the operation condition information, and the operation state information, a program selector 1711 refers to the program history DB 1514 (see Fig. 18) and the parameter history DB (see Fig. 19) and selects a program and parameters. In addition, the program selector 1711 includes a program verification/change table 1711 c (see Fig. 20), and can verify a change in the operation condition information or a change in the operation state information during a device operation and change the selection of the program.

A device controller 1712 includes an operation state video receiver 1713 that receives the operation state video from the portable terminal. The operation state video received by the operation state video receiver 1713 undergoes operation state information analysis in the application executed by an application executor 407 in Fig. 17, and operation state information is thus acquired and transferred to the program selector 1711. Note that the operation state video receiver 1713 may be provided outside the device controller 1712 and, via an operation state video analyzer, transfer the operation state information to the program selector 1711. Note that the functional arrangement of the portable terminal is the same as in Fig. 5 except that an operation state information acquirer and an operation state information transmitter which serve as a camera are added, and an illustration and description thereof will be omitted.

### (Program History DB)

Fig. 18 is a view showing the arrangement of the program history DB 1514 according to this embodiment. Note that the same reference numerals as in Fig. 8A denote the same constituent elements in Fig. 18, and a description thereof will be omitted.

The program history DB 1514 is different from Fig. 8A in that operation state information 1815 is used as a selection condition of a use driver 816 and a use application 817. The rest is the same, and a description thereof will be omitted.

### (Parameter History DB)

Fig. 19 is a view showing the arrangement of the parameter history DB 1515 according to this embodiment. Note that the same reference numerals as in Fig. 8B denote the same constituent elements in Fig. 19, and a description thereof will be omitted.

The parameter history DB 1515 is different from Fig. 8B in that operation state information 1822 or 1832 is used as a selection condition of parameters or sequences. The rest is the same, and a description thereof will be omitted.

### (Program Verification/Change Table)

Fig. 20 is a view showing the arrangement of the program verification/change table 1711c according to this embodiment. The program verification/change table 1711c is a table used to verify whether a program or parameters need to be changed due to a change in the operation condition information or operation state information and do reselection if the change is necessary.

The program verification/change table 1711c stores a verification result change necessity 2003 based on device information 2001 that specifies a connected device and current operation condition information/operation state information 2002. The program verification/change table 1711 c also stores a new driver ID 2004, a new driver parameter 2005, a new application 2006, a new application sequence 2007, and a new application parameter 2008 which are newly selected when the change is necessary. Note that if there is no change, original data is stored, or a status "no change" is stored. The program verification/change table 1711 c stores a user evaluation input by the user from the portable terminal.

### «Processing Procedure of Cloud Server»

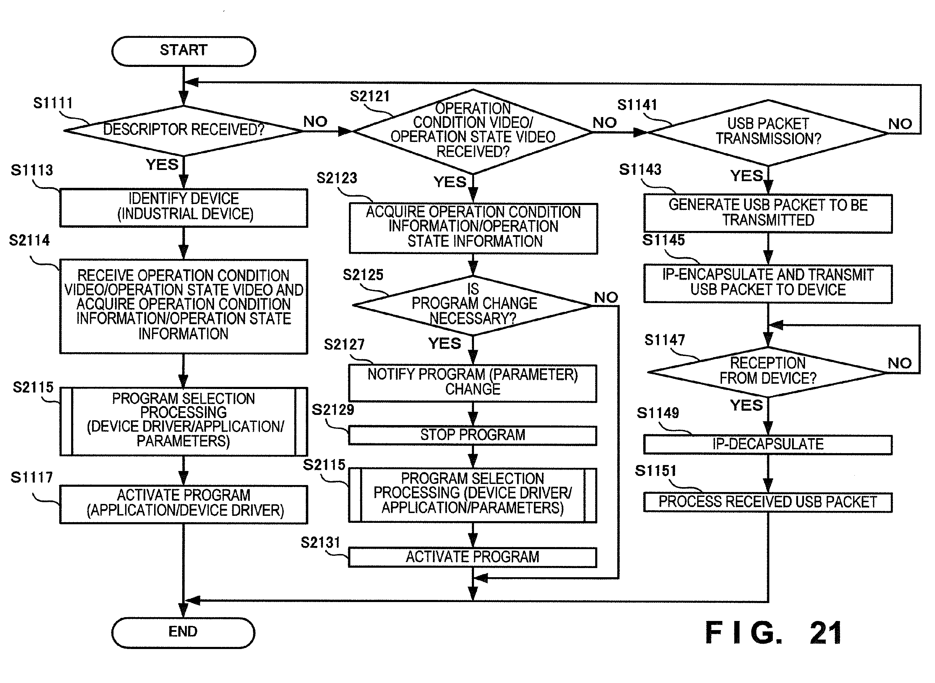

Fig. 21 is a flowchart showing the processing procedure of the cloud server 1510 according to this embodiment. Note that the same step numbers as in Fig. 11 of the second embodiment denote the same steps, and a description thereof will be omitted.

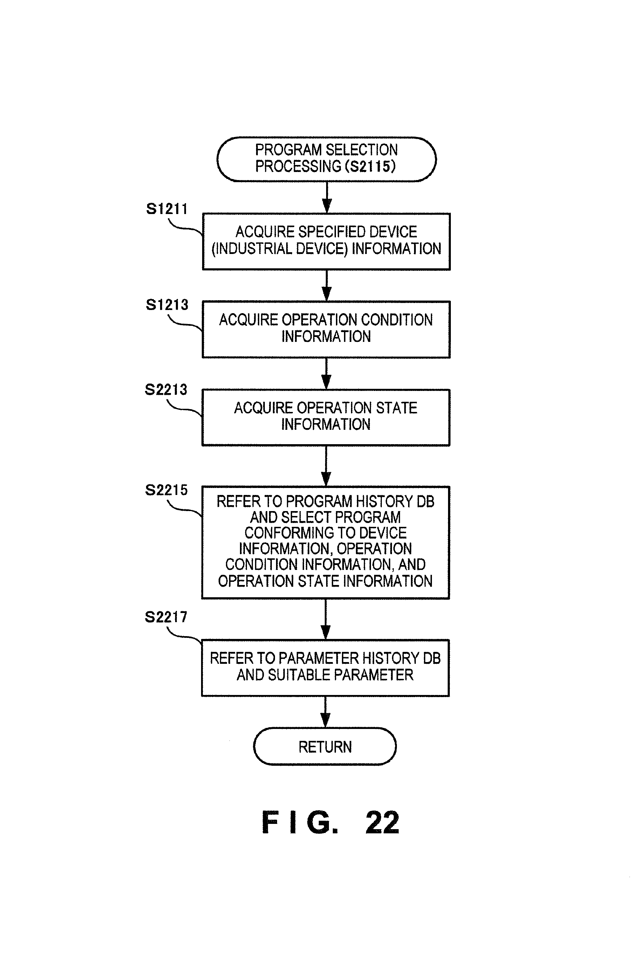

Upon receiving the descriptor of the device from the portable terminal in step S1111, the cloud server 1510 receives an operation condition video and an operation state video from the portable terminal and acquires operation condition information and operation state information in step S2114. In step S2115, the cloud server 1510 performs program selection processing according to this embodiment (see Fig. 22).

If the descriptor of the device is not received, upon receiving an operation condition video or an operation state video during the operation of the device in step S2121, the cloud server 1510 advances to step S2123 and acquires operation condition information or operation state information from the received operation condition video or operation state video. In step S2125, the cloud server 1510 determines based on the acquired operation condition information or operation state information whether the program needs to be changed. If unnecessary, nothing is performed. If the program needs to be changed, the cloud server 1510 advances to step S2127 and notifies the portable terminal to which the device is connected of the change of the program or parameters. In step S2129, the cloud server 1510 stops the program and stops the device. Next, in step S2115 of the same procedure as described above, the cloud server 1510 performs program selection processing. When a new program or parameters are selected, the cloud server 1510 activates the program and resumes the device operation by the new program in step S2131. If neither the descriptor of the device nor an operation condition video or operation state video during the operation of the device is received, the cloud server 1510 determines in step S1131 whether to an operation instruction from the portable terminal is received.

### (Program Selection Processing)

Fig. 22 is a flowchart showing the processing procedure of program selection processing S2115 according to this embodiment. Note that the same step numbers as in Fig. 12A of the second embodiment denote the same steps in Fig. 22, and a description thereof will be omitted.

In step S2213, the cloud server 1510 acquires operation state information obtained from an operation state video received from the portable terminal. In step S2215, the cloud server 1510 refers to the program history DB 1514 and selects a conforming program based on the device information, the operation condition information, and the operation state information. Then, the cloud server 1510 refers to the parameter history DB 1515 and selects parameters suitable for the selected program based on the operation condition information and the operation state information.

According to this embodiment, the operation condition of an industrial device is acquired by a simple user operation, that is, video acquisition from the camera of the portable terminal. This makes it possible to control each device from the information processing apparatus (server or the like) in conformity with the operation condition of the industrial device and also by determining the operation state from an actual motion.

### [Fourth Embodiment]

An information processing system according to the fourth embodiment of the present invention will be described next. The information processing system according to this embodiment is different from the second and third embodiments in that a device is USB-connected to one of a plurality of portable terminals, and a sensor is USB-connected to the other portable terminal, and the device operates based on the detection signal of the sensor. That is, the information processing system is different in that a cloud server performs synchronization processing of the devices connected to the plurality of portable terminals. The rest of the components and operations is the same as in the second embodiment. Hence, the same reference numerals denote the same components and operations, and a detailed description thereof will be omitted.

According to this embodiment, the operations of industrial devices that are not gathered in one site are controlled based on the detection signal of the sensor. It is therefore possible to control the operations of the industrial devices from an information processing apparatus (server or the like) without heavy investment.

Note that in this embodiment, the sensor is also a device connected to a portable terminal, and will be referred to as a device from the viewpoint of the relationship with the portable terminal. In this embodiment, the combination of a sensor and a device has been described. However, the present invention is not limited to this.

In this embodiment, a preferred arrangement for performing unified processing for a plurality of inputs/outputs will be explained using the concept of virtual PC. However, the present invention is not limited to this.

### «Information Processing System»

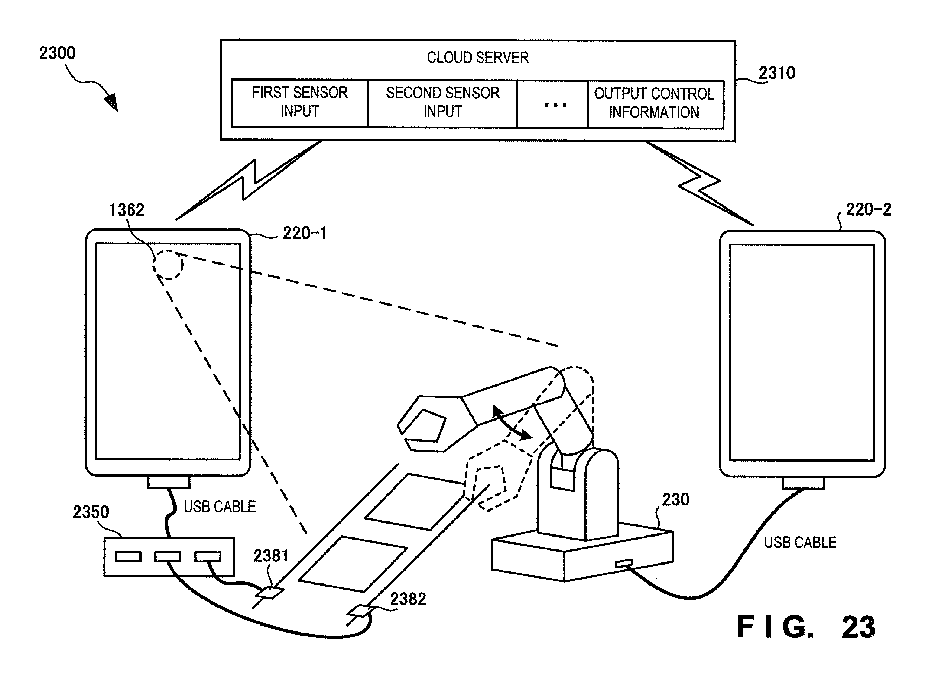

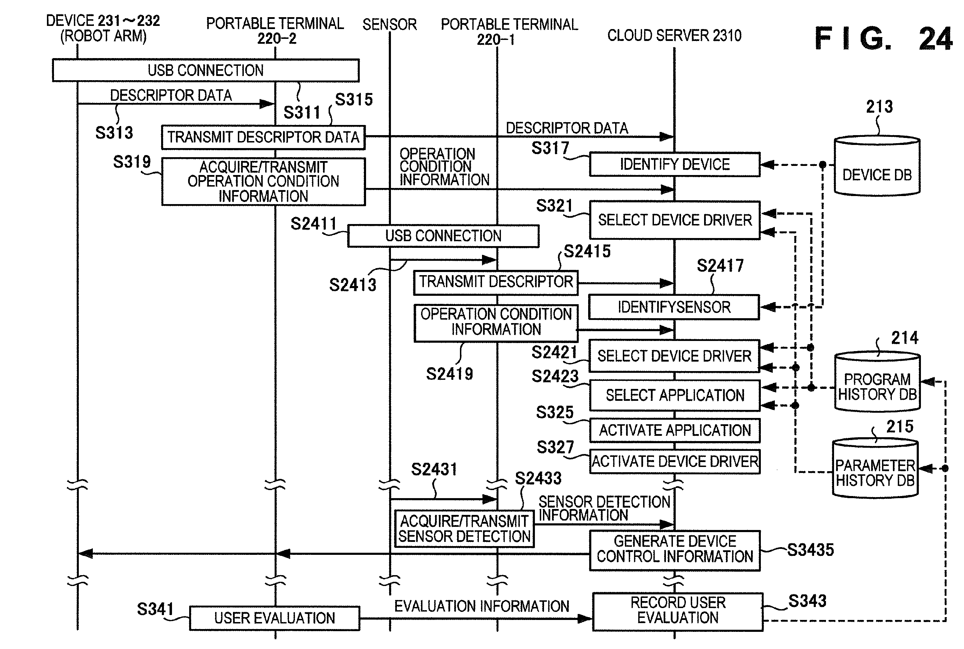

The operation of an information processing system 2300 according to this embodiment will be described with reference to Figs. 23 and 24.

### (Operation Concept)

Fig. 23 is a view for explaining the operation concept of the information processing system 2300 according to this embodiment.

In the information processing system 2300, a cloud server 2310 detects detection signals from two sensors 2381 and 2382 USB-connected to a portable terminal 220-1 via a router 2350. Based on the received signals, the cloud server 2310 controls the operation of a device 230 USB-connected to a portable terminal 220-2. In this embodiment, the cloud server 2310 generates one virtual PC in the server and performs unified control.

Referring to Fig. 23, a camera 1362 of the portable terminal 220-1 captures the entire apparatus, thereby giving unity and monitoring the operation state. Note that the role sharing between the portable terminals 220-1 and 220-2 is not limited to the example shown in Fig. 23. The number of portable terminals is not limited to two, and many portable terminals may be used.

### (Operation Procedure)

Fig. 24 is a sequence chart showing the operation procedure of the information processing system 2300 according to this embodiment. Note that the same step numbers as in Fig. 3A of the second embodiment denote the same steps in Fig. 24, and a description thereof will be omitted. The following description will be made assuming the device 230 as a representative.

In step S2411, a sensor is USB-connected to the portable terminal 220-1. In step S2413, the descriptor of the sensor is read out. In step S2415, the descriptor is transmitted from the portable terminal 220-1 to the cloud server 2310. In step S2417, the cloud server 2310 refers to a device DB 213 and specifies the sensor. Next, the portable terminal 220-1 acquires the operation condition information of the sensor and transmits it to the cloud server 2310.

In step S2421, the cloud server 2310 refers to a program history DB 214 and a parameter history DB 215 and selects a device driver for the sensor and parameters thereof based on the sensor information and the operation condition information. In step S2423, the cloud server 2310 refers to the program history DB 214 and the parameter history DB 215 and selects an application for the sensor and parameters thereof based on the sensor information and the operation condition information.

During the operations of the device 230 and the sensor, the portable terminal 220-1 acquires the detection signal of the sensor in step S2431. In step S2433, the portable terminal 220-1 transmits the acquired sensor detection information to the cloud server 2310. In step S3435, the cloud server 2310 (generated virtual PC in this embodiment) generates device control information based on the sensor detection signal and transmits it to the device 230 via the portable terminal 220-2.

### «Functional Arrangement of Cloud Server»

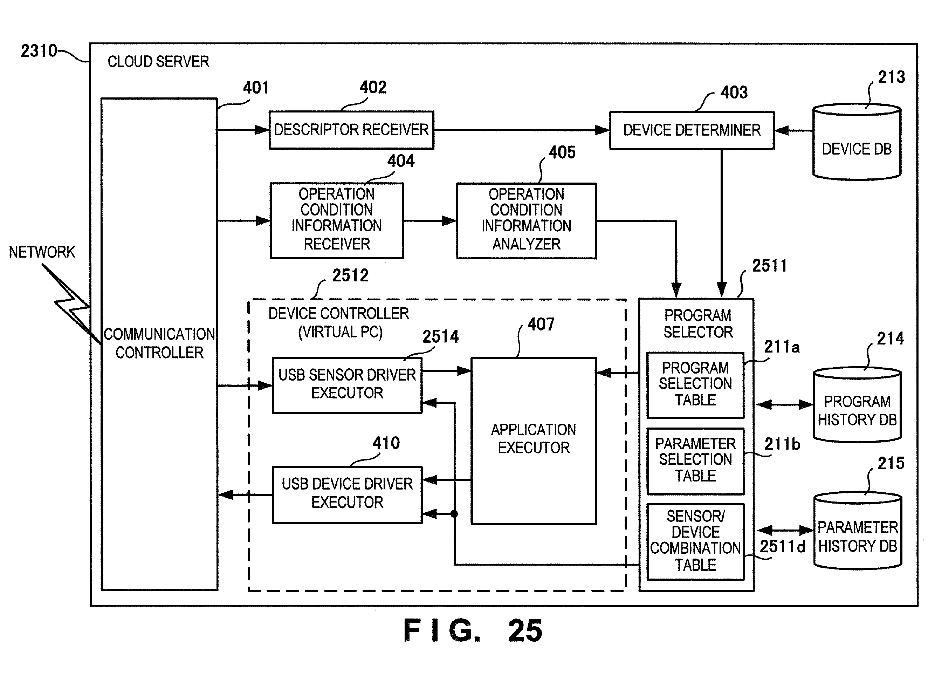

Fig. 25 is a block diagram showing the functional arrangement of the cloud server 2310 according to this embodiment. Note that the same reference numbers as in Fig. 4 of the second embodiment denote the same functional components in Fig. 25, and a description thereof will be omitted.

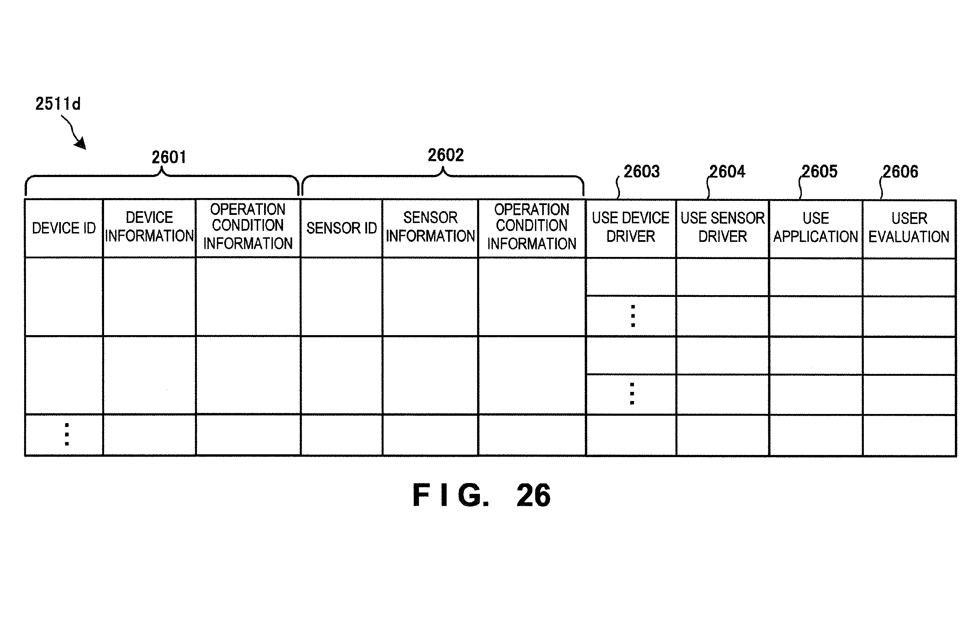

A program selector 2511 also includes a sensor/device combination table 2511d (see Fig. 26). The program selector 2511 recognizes the sensor and the device, which are connected to different portable terminals, as one unified apparatus by the sensor/device combination table 2511 d, and selects drivers conforming to each other and parameters thereof by referring to the program history DB 214 and the parameter history DB 215. In addition, an application suitable for the combination and parameters thereof are selected.

In this embodiment, a device controller 2512 is a generated virtual PC. The device controller 2512 includes a USB sensor driver executor 2514 in addition to an application executor 407 and a USB device driver executor 410. Note that Fig. 25 does not illustrate the remaining functional components of the device controller 2512, which are connected to the driver or application, to avoid complexity.

### (Sensor/Device Combination Table)

Fig. 26 is a view showing the arrangement of the sensor/device combination table 2511d according to this embodiment.

The sensor/device combination table 2511d stores device data 2601 including a device ID, device information, and operation condition information, and sensor data 2602 including a sensor ID, sensor information, and operation condition information. The sensor/device combination table 2511 d also stores a use device driver 2603, a use sensor driver 2604, and a use application 2605 in association with the combination of the device data 2601 and the sensor data 2602. Finally, the sensor/device combination table 2511d stores a user evaluation input by the user from the portable terminal.

### «Processing Procedure of Cloud Server»

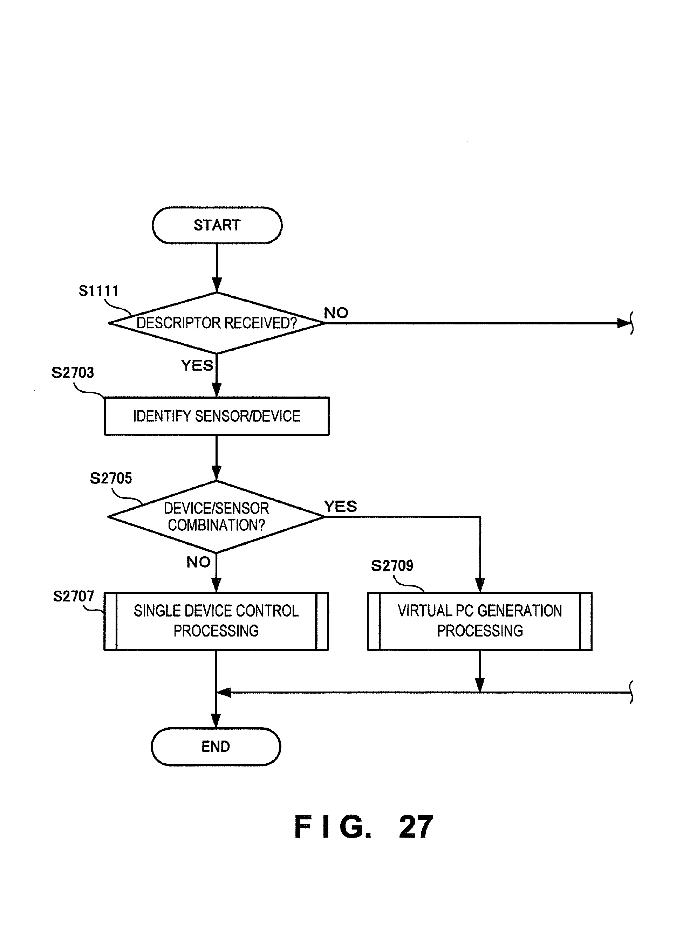

Fig. 27 is a flowchart showing the processing procedure of the cloud server 2310 according to this embodiment. Note that Fig. 27 illustrates only the procedure related to this embodiment. For other processing procedures, see other flowcharts of Fig. 11 and the like.

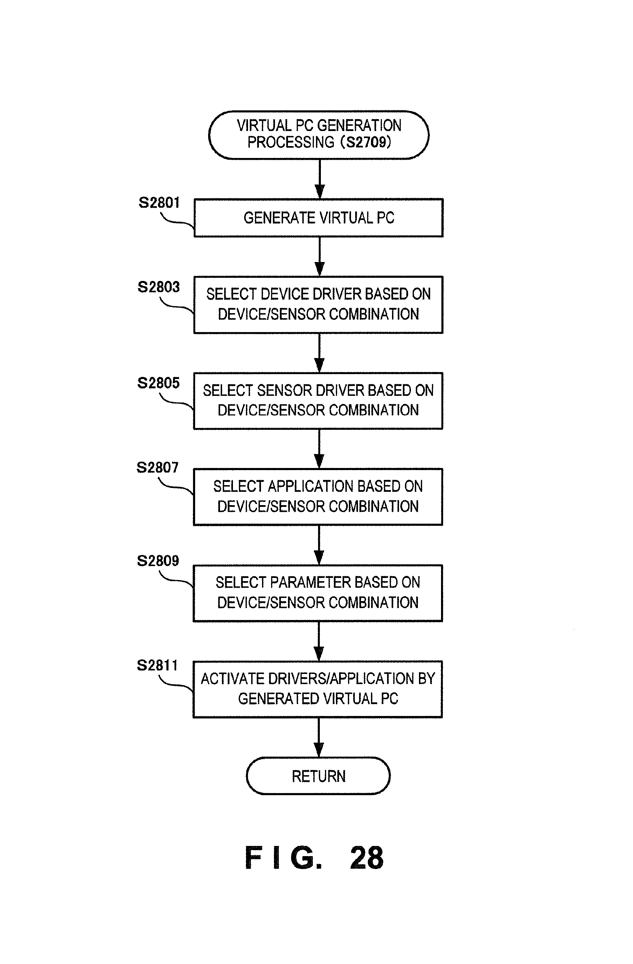

Upon receiving the descriptor of a device from the portable terminal in step S1111, the cloud server 2310 advances to step S2703. In step S2703, the cloud server 2310 acquires the descriptors of the device and the sensor and specifies the device and the sensor. In step S2705, the cloud server 2310 determines whether the device and the sensor make up a combination. If they do not make up a combination, the cloud server 2310 advances to step S2707, and performs program selection processing for each device (corresponding to steps S 1115 to S1119 of Fig. 11). If the device and the sensor make up a combination, the cloud server 2310 advances to step S2709, and performs virtual PC generation processing to handle the device and the sensor as a combination (see Fig. 28).

### (Virtual PC Generation Processing)

Fig. 28 is a flowchart showing the processing procedure of virtual PC generation processing according to this embodiment.

In step S2801, the cloud server 2310 generates a virtual PC in it. Basically, it is only necessary to ensure a plurality of input/output functions connected to associated input/output devices and a function of performing processing between input/output information independently of the other functions. Note that the arrangement of the virtual PC is not the feature of this embodiment, and a detailed description thereof will be omitted.

In step S2803, the cloud server 2310 selects a device driver based on the combination of the device and the sensor. In step S2805, the cloud server 2310 selects a sensor driver based on the combination of the device and the sensor. In step S2807, the cloud server 2310 selects an application based on the combination of the device and the sensor. In step S2809, the cloud server 2310 selects the parameters of the drivers and the application based on the combination of the device and the sensor. In step S2811, the cloud server 2310 activates the drivers and the application using the parameters selected by the generated virtual PC.

According to this embodiment, the operations of industrial devices that are not gathered in one site are controlled based on the detection signal of the sensor. It is therefore possible to control the operations of the industrial devices from the information processing apparatus (server or the like) without heavy investment.

### [Fifth Embodiment]

An information processing system according to the fifth embodiment of the present invention will be described next. The information processing system according to this embodiment is different from the second to fourth embodiments in that a cloud server integrally controls a production line, in which the number of devices connected to a portable terminal is not one, and a plurality of devices operate in association with each other, by USB-connecting the portable terminals of the devices. The rest of the components and operations is the same as in the second to fourth embodiments. Hence, the same reference numerals denote the same components and operations, and a detailed description thereof will be omitted.

According to this embodiment, a line formed from a plurality of devices is integrally controlled from an information processing apparatus (server or the like) via a plurality of portable terminals. It is therefore possible to implement control of the line formed from the plurality of devices from the information processing apparatus without heavy investment.

Note that in this embodiment, a preferred arrangement for controlling a line of a plurality of devices will be explained using the concept of virtual PC. However, the present invention is not limited to this.

### «Information Processing System»

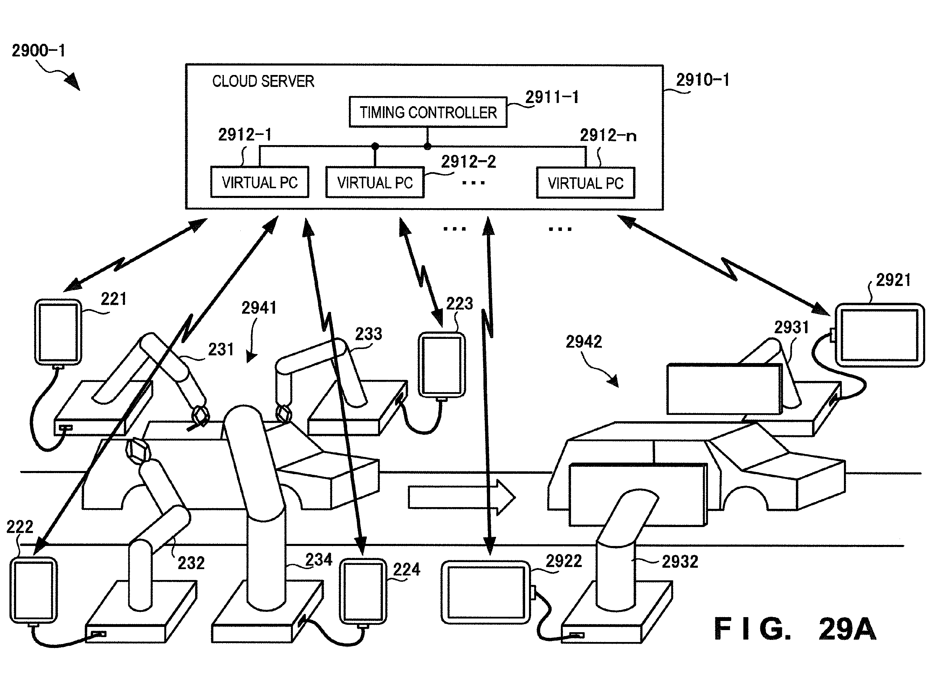

The operation of an information processing system 2900 according to this embodiment will be described with reference to Figs. 29A to 30.

### (Operation Concept)

Fig. 29A is a view for explaining a first operation concept 2900-1 of the information processing system 2900 according to this embodiment. In the example of Fig. 29A, a plurality of virtual PCs 2912-1 to 2912-n corresponding to devices are generated in a cloud server 2910-1. A timing controller 2911-1 controls the plurality of virtual PCs 2912-1 to 2912-n.

Fig. 29A shows an arrangement in which a plurality of robot arms 231 to 234 and welding robots 2931 and 2932 of an autoportable assembly line are connected to the USB connectors of portable terminals, respectively.

In this case, each of the plurality of robot arms 231 to 234 and the welding robots 2931 and 2932 may be assigned to one virtual PC, or, for example, the robot arms 231 to 234 may be assigned to one virtual PC, whereas the welding robots 2931 and 2932 may be assigned to another virtual PC.

The timing controller 2911-1 controls not to cause a shift such as an operation delay between the devices in the associated line in consideration of the distance between the devices or drivers, applications, and parameters in use. Note that sensors may be connected, although not illustrated in Fig. 29A.

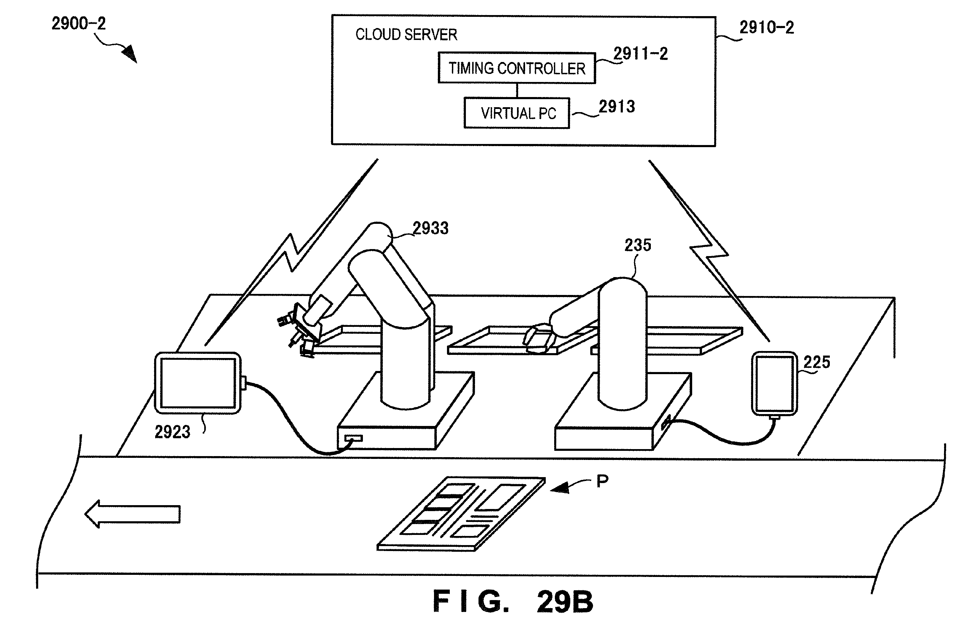

Fig. 29B is a view for explaining a second operation concept 2900-2 of the information processing system 2900 according to this embodiment. In the example of Fig. 29B, one virtual PC 2913 is generated in a cloud server 2910-2. A timing controller 2911-2 controls the one virtual PC 2913.

Fig. 29B shows an arrangement in which a plurality of robot arms 235 and 2933 of a control board production line are connected to the USB connectors of portable terminals, respectively.

In this case, the plurality of robot arms 235 and 2933 are assigned to the one virtual PC 2913. This is also because when the robot arms are divisionally assigned to a plurality of virtual PCs, a communication delay between the virtual PCs affects the manufacture.

The timing controller 2911-2 controls not to cause a shift such as an operation delay between the devices in consideration of the distance between the devices or drivers, applications, and parameters in use. Note that sensors may be connected, although not illustrated in Fig. 29B.

### (Operation Procedure)

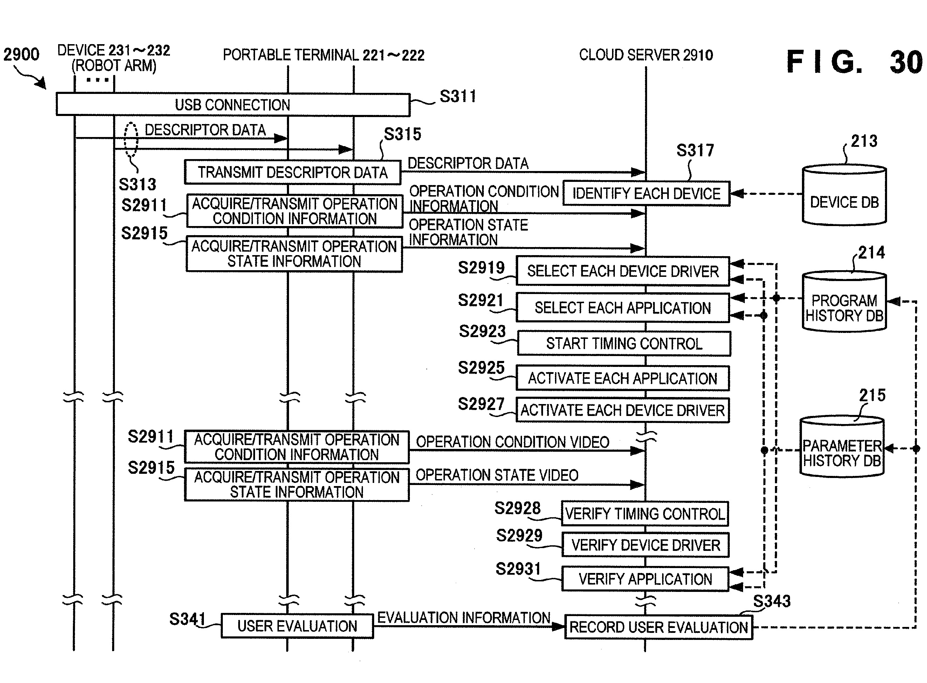

Fig. 30 is a sequence chart showing the operation procedure of the information processing system 2900 according to this embodiment. Note that the same step numbers as in Fig. 3A of the second embodiment denote the same steps in Fig. 30, and a description thereof will be omitted. The following description will be made assuming a device 230 as a representative.

In steps S2911 and S2915, the operation condition information and the operation state information of a device connected to each portable terminal are acquired and transmitted from each portable terminal to the cloud server 2910. In step S2919, the cloud server 2910 refers to a program history DB 214 and a parameter history DB 215 and selects device drivers based on the device information and the operation condition information of each device. In step S2921, the cloud server 2910 selects applications.

In step S2923, timing control starts. The cloud server 2910 activates the selected applications in step S2925, and activates the selected device drivers in step S2927. Note that detailed data exchanges are not illustrated to simplify the drawing. For further information, see Fig. 4A and the like.

After that, when the operation condition information and the operation state information of the devices are acquired and transmitted from the portable terminals to the cloud server 2910 during the operation of the line, the cloud server 2910 verifies the timing control in step S2928. In step S2929, the cloud server 2910 verifies the device drivers. In step S2931, the cloud server 2910 verifies the applications.

### «Functional Arrangement of Cloud Server»

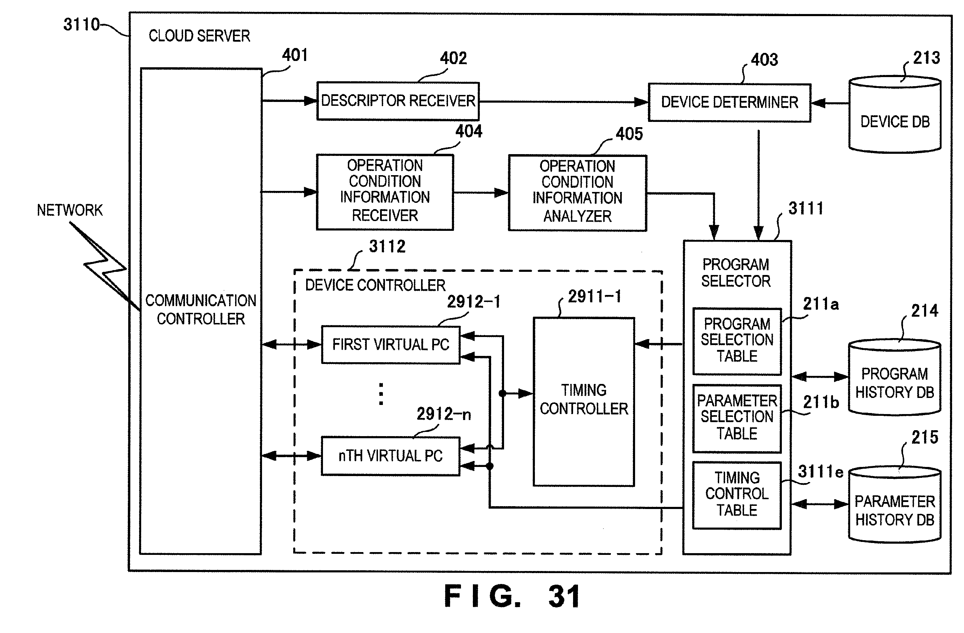

Fig. 31 is a block diagram showing the functional arrangement of the cloud server 2910 according to this embodiment. Note that the same reference numbers as in Fig. 4 of the second embodiment denote the same functional components in Fig. 31, and a description thereof will be omitted.

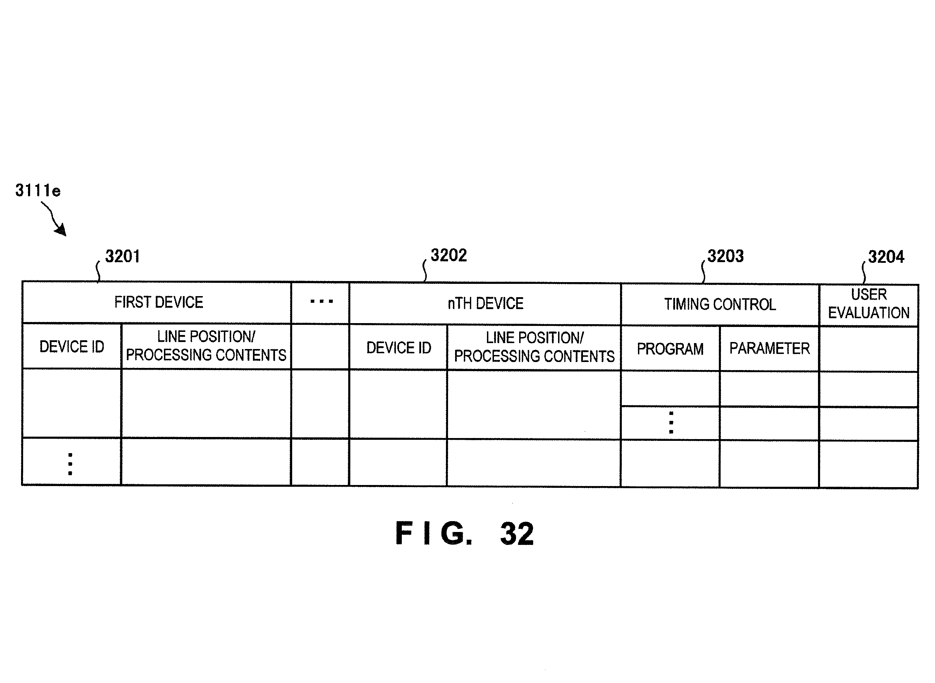

A program selector 3111 also includes a timing control table 3111e used to select a timing control program configured to perform timing control and parameters thereof (see Fig. 32).

A device controller 3112 includes the first virtual PC 2912-1 to the nth virtual PC 2912-n. In each virtual PC, the driver and the application selected by the program selector 3111 are executed. On the other hand, the timing controller 2911-1 provided in the device controller 3112 executes the timing control program selected by the program selector 3111 and controls the timings between the devices controlled by the virtual PCs.

### (Timing Control Table)

Fig. 32 is a view showing the arrangement of the timing control table 3111e according to this embodiment.

For devices included in a line, the timing control table 3111e stores, as selected timing control 3203, a program and a parameter in association with first device information 3201 to nth device information 3202 each including a device ID, a line position, and processing contents. The timing control table 3111e also stores a user evaluation 3204 input by the user from the portable terminal.

### «Processing Procedure of Cloud Server»

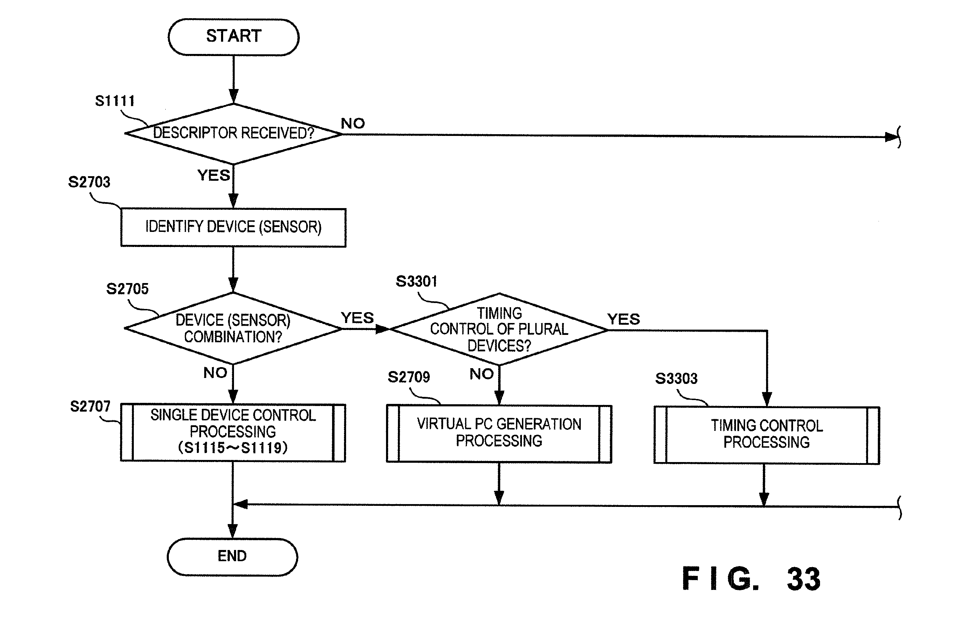

Fig. 33 is a flowchart showing the processing procedure of the cloud server 2910 according to this embodiment. Note that the same step numbers as in Fig. 27 denote the same steps in Fig. 33, and a description thereof will be omitted.

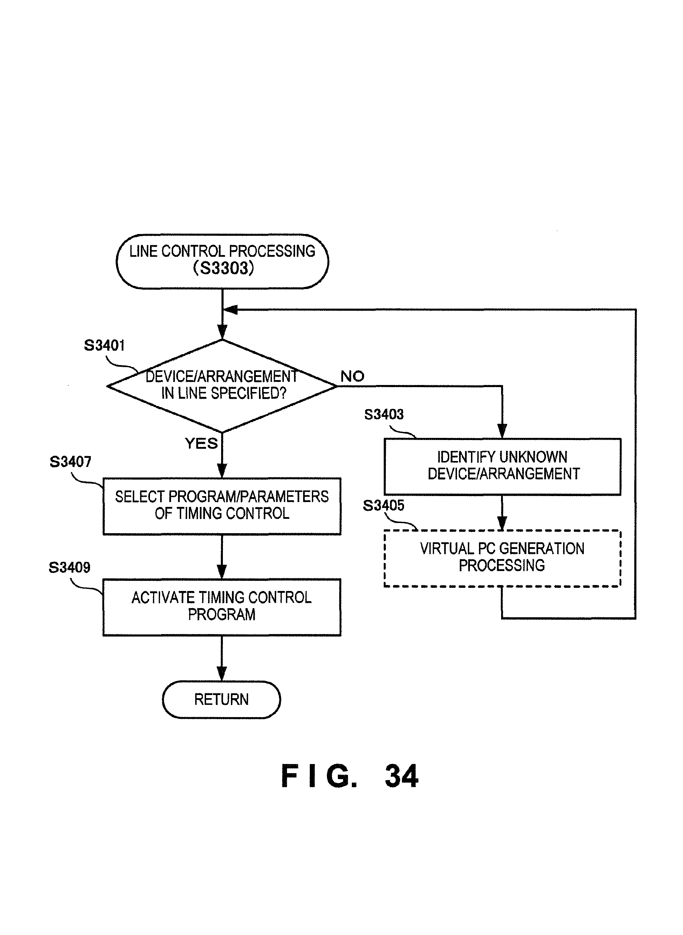

In step S3301, the cloud server 2910 determines whether timing control of a plurality of devices is necessary. For individual device control, the cloud server 2910 performs virtual PC generation processing (see Fig. 28). If timing control of a plurality of devices is necessary, the cloud server 2910 advances to step S3303 and executes timing control processing (see Fig. 34).

### (Timing Control Processing)

Fig. 34 is a flowchart showing the processing procedure of timing control processing S3303 according to this embodiment.

In step S3401, the cloud server 2910 determines whether the devices in the line and their arrangements have already been specified. If they have not been specified yet, the cloud server 2910 advances to step S3403, and specifies an unknown device and its arrangement. When generating a plurality of virtual PCs as in Fig. 29A, the cloud server 2910 generates a new virtual PC in step S3405.

If the devices in the line and their arrangements have already been specified, the cloud server 2910 advances to step S3407 and selects a program and parameters of timing control based on the timing control table 3111e. In step S3409, the cloud server 2910 activates the timing control program.

According to this embodiment, a line formed from a plurality of devices is integrally controlled from the information processing apparatus (server or the like) via a plurality of portable terminals. It is therefore possible to implement control of the line formed from the plurality of devices from the information processing apparatus without heavy investment.

### [Sixth Embodiment]

An information processing system according to the sixth embodiment of the present invention will be described next. The information processing system according to this embodiment is different from the second to fifth embodiments in that a portable terminal not only serves as a relay point between a cloud server and a device but also partially processes device control. For example, the cloud server is configured to send not USB packets but instruction commands to the portable terminal while leaving a series of operations such as exchange of a set of USB protocols to the portable terminal. The rest of the components and operations is the same as in the second to fifth embodiments. Hence, the same reference numerals denote the same components and operations, and a detailed description thereof will be omitted.

According to this embodiment, the portable terminal partially executes device control by effectively using the resource of the portable terminal. This can reduce the load on an information processing apparatus (server or the like). It is also possible to perform high-speed processing while eliminating a communication delay between the device and the information processing apparatus.

### «Information Processing System»

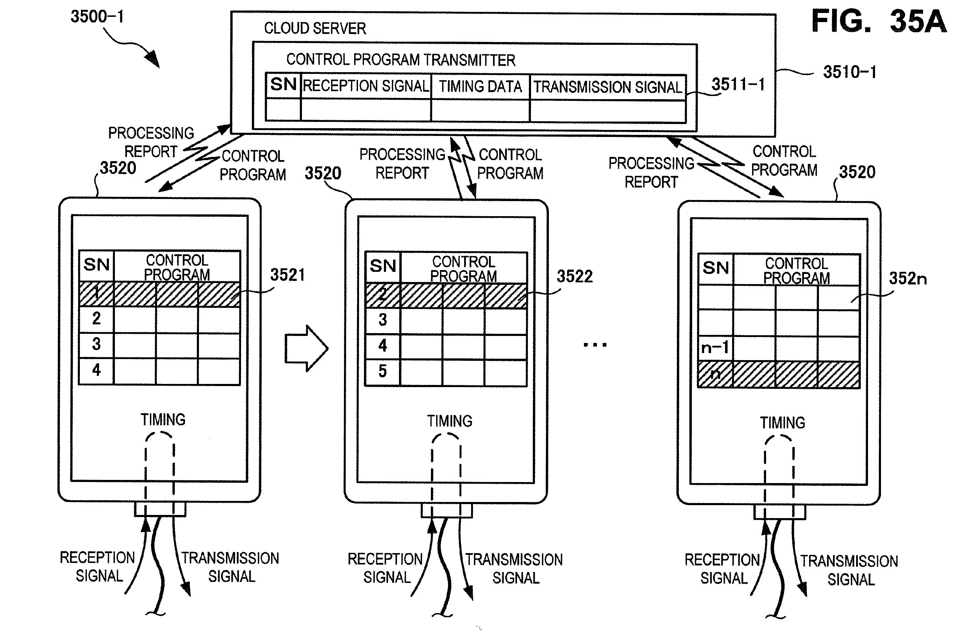

The operation of an information processing system 3500 according to this embodiment will be described with reference to Figs. 35A to 36B.

### (Operation Concept)

Fig. 35A is a view for explaining a first operation concept 3500-1 of the information processing system 3500 according to this embodiment. Referring to Fig. 35A, one cycle including reception from the device timing control → return to the device in information exchange with the device is processed by the portable terminal as a control program of one control unit.

In Fig 35A, the processing of the device progresses from left to right. A cloud server 3510-1 includes a control program transmitter 3511-1. The cloud server 3510-1 adds a serial number (SN) to a control program and downloads it to a portable terminal 3520. In the leftmost view, hatched processing of SN = 1 is being performed between the portable terminal and the device, as indicated by a display screen 3521 of the portable terminal 3520. When the processing of SN = 1 ends, the processing advances to SN = 2, and the processing of SN = 1 is deleted from the portable terminal because it is completed, as indicated by a display screen 3522 of the next view. At this time, an additional control program is downloaded from the cloud server 3510-1 at a predetermined timing so the processing in the portable terminal 3520 does not delay. The rightmost view shows a state in which the last control program of SN = n is being executed, as indicated by a display screen 352n. When the last control program of SN = n ends, the device processing ends.

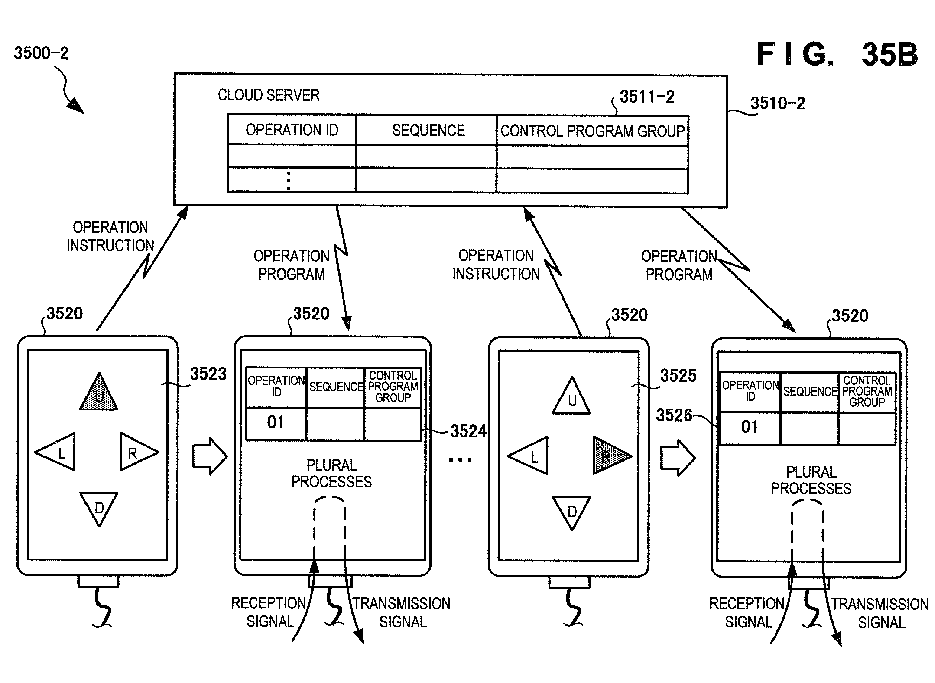

Fig. 35B is a view for explaining a second operation concept 3500-2 of the information processing system 3500 according to this embodiment. Referring to Fig. 35B, the portable terminal 3520 shares a set of device control operations more than in Fig. 35A. For example, in Fig. 35B, an operation instruction to each robot arm in the second embodiment is executed between the device and the portable terminal 3520.

In Fig 35B, the processing of the device progresses from left to right. A cloud server 3510-2 includes a table 3511-2 that stores a sequence and a control program group in association with an operation ID, and downloads the control programs to the portable terminal 3520. In the leftmost view, the hatched "up" operation (operation ID = 1) is instructed, as indicated by a display screen 3523 of the portable terminal 3520. Then, a control program group of operation ID = 1 is executed, as indicated by a display screen 3524 of the next view. The portable terminal 3520 controls the device until the robot arm lifts upward, as shown in Fig. 2A.

When "right" (operation ID = 3) is instructed, as indicated by a screen display 3525 of the third view from the left, the portable terminal 3520 controls the device by a control program group of operation ID = 3, as indicated by a display screen 3526 of the rightmost view, until the right turn ends.

Note that the device control sharing of the portable terminal 3520 is not limited to the above example. The degree of sharing to be assigned largely depends on the processing capability of the portable terminal 3520.

### (Operation Procedure)

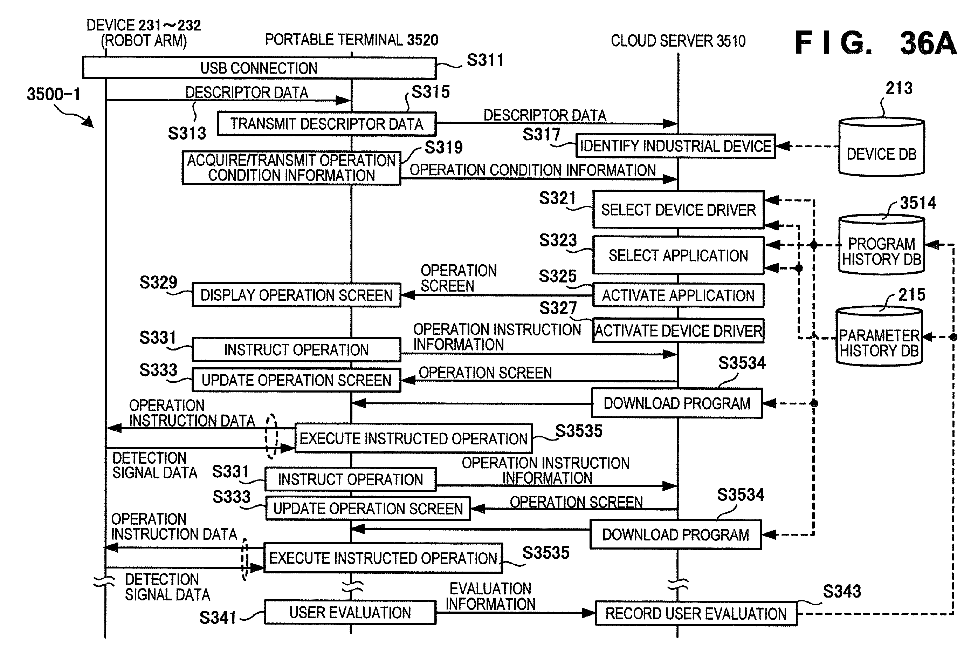

Fig. 36A is a sequence chart showing the first operation procedure of the information processing system 3500 according to this embodiment. Note that the same step numbers as in Fig. 3A of the second embodiment denote the same steps in Fig. 36A, and a description thereof will be omitted.

In step S3534, a control program stored in a program history DB 3514 is downloaded from the cloud server 3510 to the portable terminal 3520. In step S3535, the program executor of the portable terminal 3520 executes the downloaded control program and controls the device independently of the cloud server 3510. The same as described above will apply hereinafter.

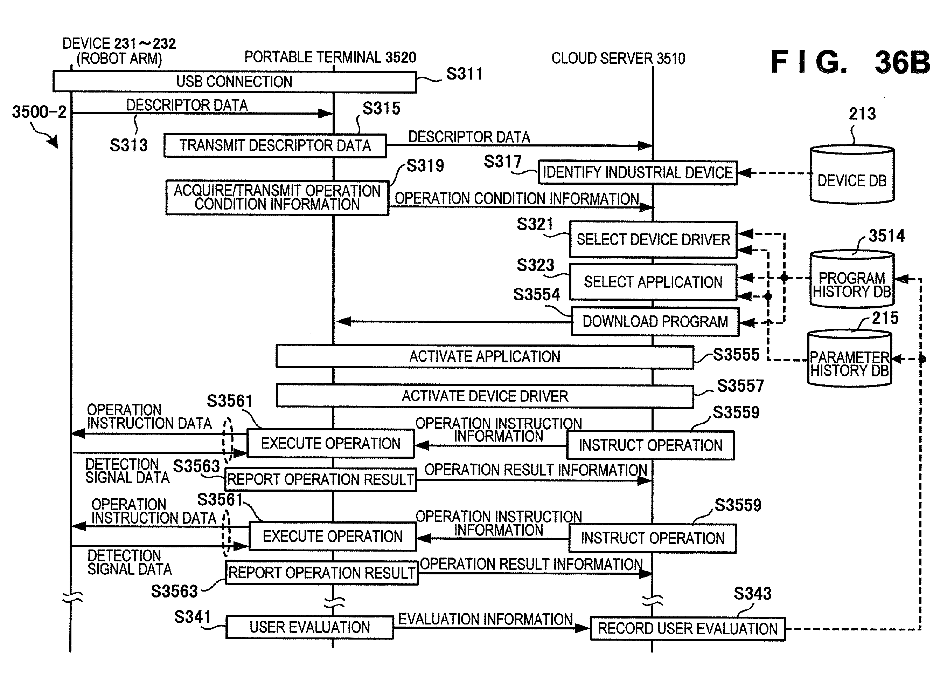

Fig. 36B is a sequence chart showing the second operation procedure of the information processing system 3500 according to this embodiment. Note that the same step numbers as in Fig. 3A of the second embodiment denote the same steps in Fig. 36B, and a description thereof will be omitted.

In step S3554, an operation program stored in the program history DB 3514 is downloaded from the cloud server 3510 to the portable terminal 3520. In step S3555, the cloud server 3510 and the portable terminal 3520 divisionally activate an application in association with each other. In step S3557, the cloud server 3510 and the portable terminal 3520 divisionally activate a device driver in association with each other.

Upon receiving a device operation instruction from the cloud server 3510 in step S3559, the portable terminal 3520 executes the downloaded program and executes the instructed operation in step S3561. In step S3563, the portable terminal 3520 reports the operation result to the cloud server 3510. The same as described above will apply hereinafter.

### «Functional Arrangement of Cloud Server»

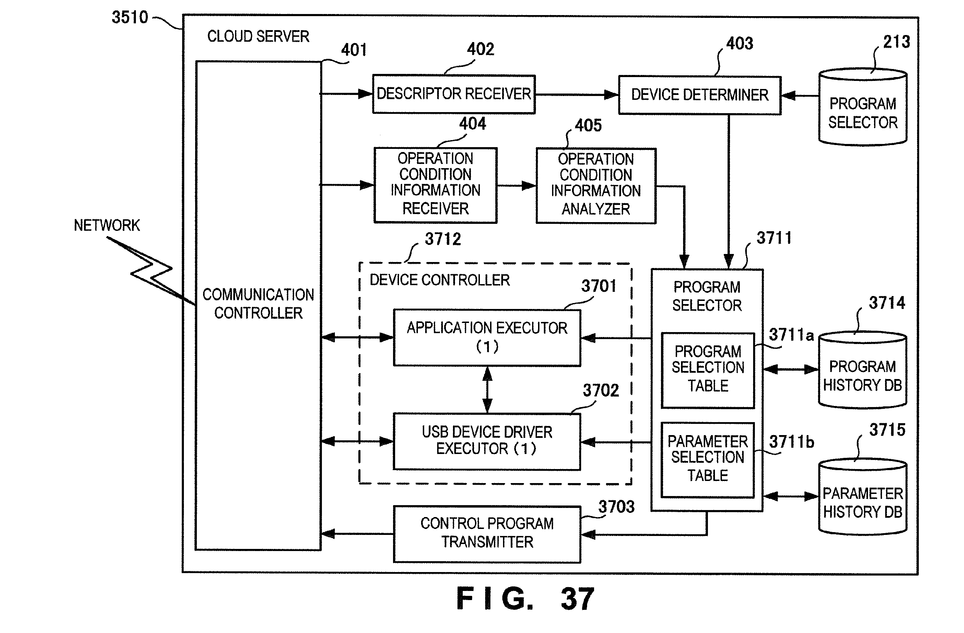

Fig. 37 is a block diagram showing the functional arrangement of the cloud server 3510 according to this embodiment. Note that the same reference numbers as in Fig. 4 of the second embodiment denote the same functional components in Fig. 37, and a description thereof will be omitted.

A program selector 3711 includes a program selection table 3711a and a parameter selection table 3711b, which are used to select a program and parameters to be downloaded to the portable terminal 3520 as well. The program selector 3711 selects a program by referring to a program history DB 3714 and a parameter history DB 3715.

A device controller 3712 includes an application executor (1) 3701 and a USB device driver executor (1) 3702, which operate while being partially shared by the portable terminal 3520. Note that in this embodiment, an example in which both the application and the driver are shared has been described. However, another sharing is also possible. For example, the application is mainly executed by the cloud server 3510, and the driver is mainly executed by the portable terminal 3520.

A control program transmitter 3703 transmits, to the portable terminal 3520, the control program selected by the program selector 3711 and determined to be downloaded to the portable terminal 3520.

### «Functional Arrangement of Portable Terminal»

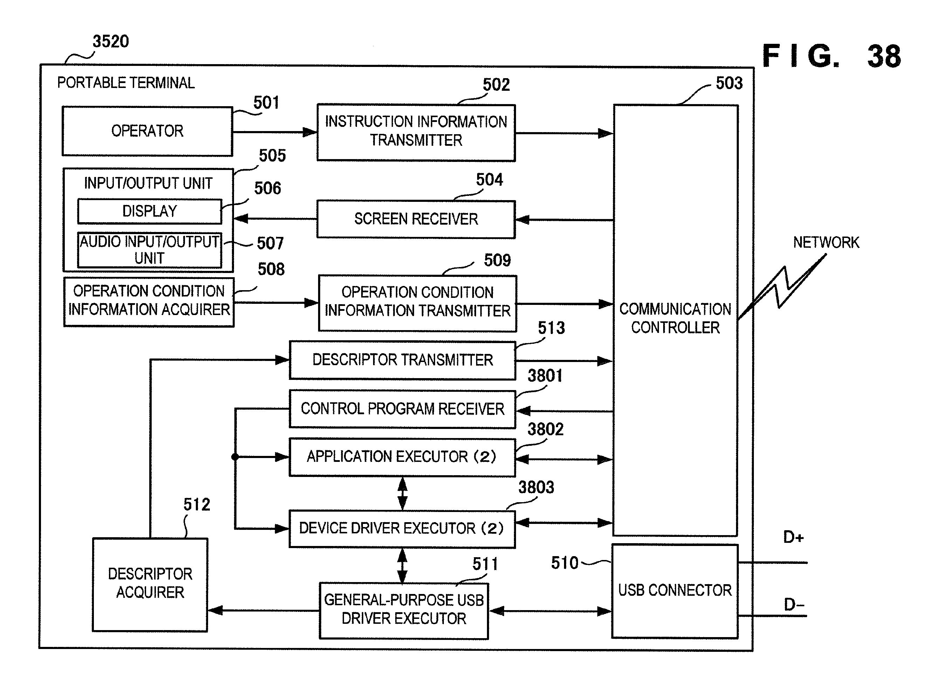

Fig. 38 is a block diagram showing the functional arrangement of the portable terminal 3520 according to this embodiment. Note that the same reference numbers as in Fig. 5 of the second embodiment denote the same functional components in Fig. 38, and a description thereof will be omitted.

A control program receiver 3801 receives the control program transmitted from the control program transmitter 3703 of the cloud server 3710. An application executor (2) 3802 implements the application in cooperation with the application executor (1) 3701 of the cloud server 3510. A device driver executor (2) 3803 implements the device driver in cooperation with the USB device driver executor (1) 3702 of the cloud server 3710.

### (Program History DB)

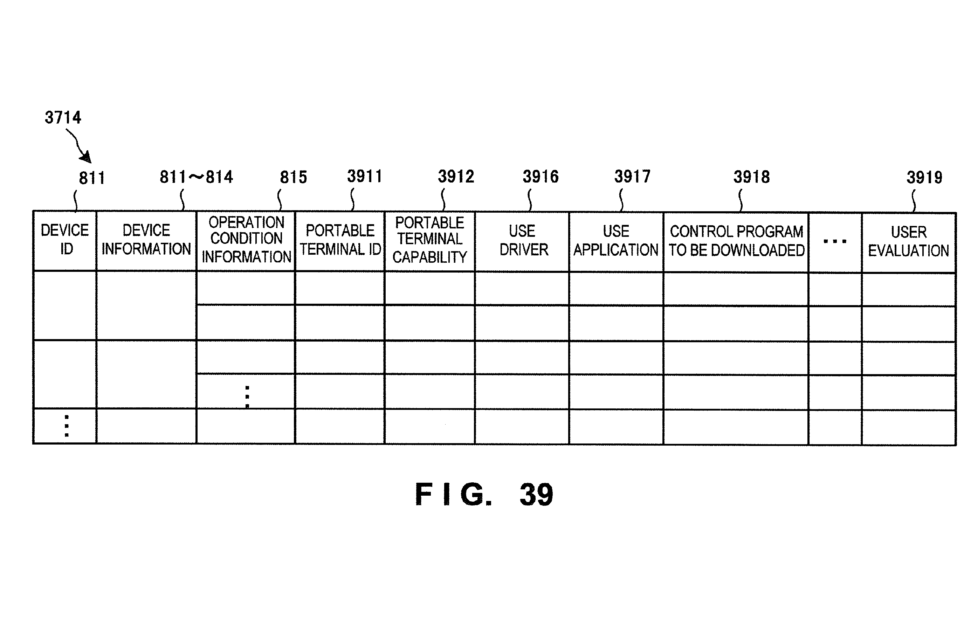

Fig. 39 is a view showing the arrangement of the program history DB 3714 according to this embodiment. Note that the same reference numerals as in Fig. 8A of the second embodiment denote the same constituent elements in Fig. 39, and a description thereof will be omitted.

The program history DB 3714 stores a use driver 3916, a use application 3917, and a control program 3918 to be downloaded in correspondence with a portable terminal ID 3911 and a portable terminal capability 3912. When sharing by the portable terminal is possible, the use driver 3916 and the use application 3917, which have a divisible arrangement, are selected. Finally, the program history DB 3714 stores a user evaluation input by the user from the portable terminal.

Note that as for the parameter history DB 3715, data are added to a parameter history DB 215, like the program history DB 3714, although an illustration and description thereof will be omitted.

### «Processing Procedure of Cloud Server»

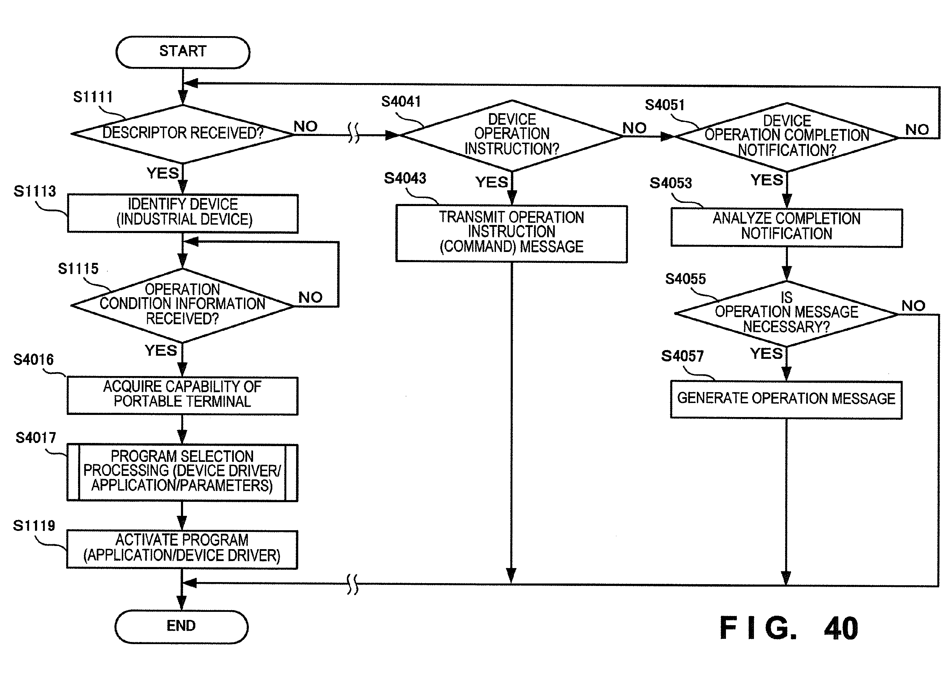

Fig. 40 is a flowchart showing the processing procedure of the cloud server 3510 according to this embodiment. Note that the same step numbers as in Fig. 11 of the second embodiment denote the same steps in Fig. 40, and a description thereof will be omitted.

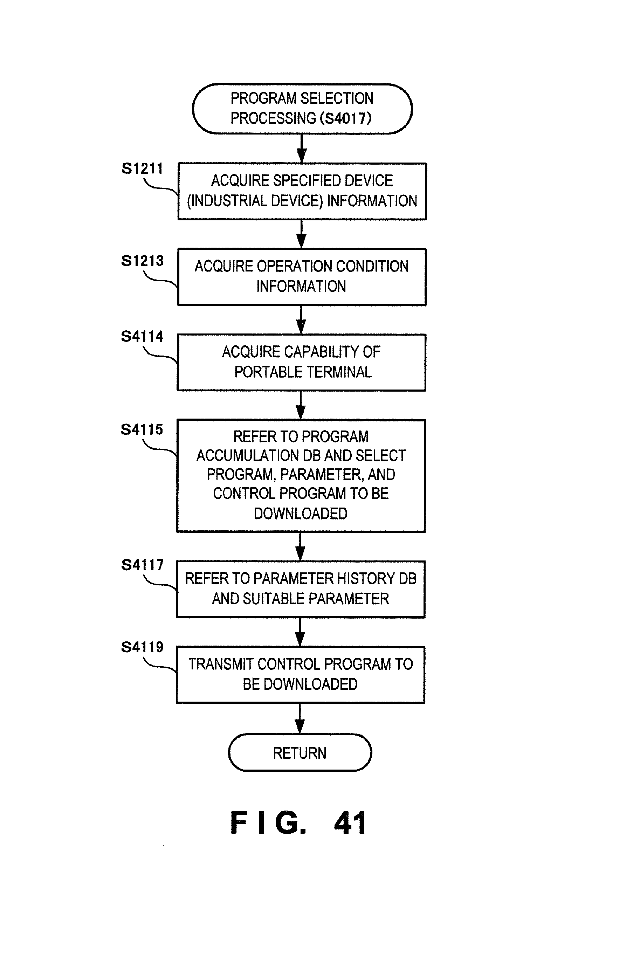

Upon determining in step S1111 that a descriptor is received, the cloud server 3510 acquires the capability of the connected portable terminal in step S4016. In step S4017, the cloud server 3510 performs program selection processing according to this embodiment (see Fig. 41).

Upon determining in step S4041 that an operation instruction for the device is necessary, the cloud server 3510 transmits not a USB packet but an operation instruction (command) message to the portable terminal 3520 in step S4043.

Upon determining in step S4051 that a device operation completion notification is received from the portable terminal 3520, the cloud server 3510 advances to step S4053 and analyzes the completion notification. In step S4055, the cloud server 3510 determines whether an operation message to be transmitted in step S4043 is necessary. If necessary, the cloud server 3510 generates an operation message in step S4057.

### (Program Selection Processing)

Fig. 41 is a flowchart showing the processing procedure of program selection processing S4017 according to this embodiment. Note that the same step numbers as in Fig. 12A of the second embodiment denote the same steps in Fig. 41, and a description thereof will be omitted.

In step S4114, the cloud server 3510 acquires the capability of the portable terminal. In step S4115, the cloud server 3510 refers to the program history DB 3714 and selects a conforming program and a control program to be downloaded based on device information, operation condition information, and the capability of the portable terminal. In step S4117, the cloud server 3510 refers to the parameter history DB 3715 and selects parameters suitable for the selected programs based on the operation condition information.

### «Processing Procedure of Portable Terminal»

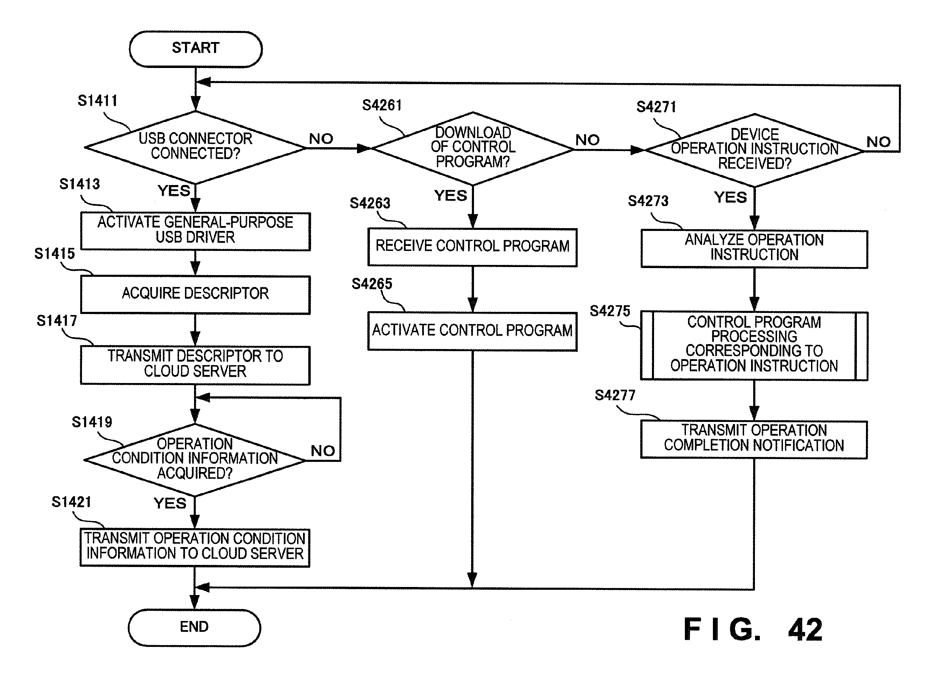

Fig. 42 is a flowchart showing the processing procedure of the portable terminal 3520 according to this embodiment. Note that the same step numbers as in Fig. 14 of the second embodiment denote the same steps in Fig. 42, and a description thereof will be omitted.

In step S4261, the portable terminal 3520 determines whether a control program is downloaded. If a control program is downloaded, the portable terminal 3520 advances to step S4263 and receives the control program transmitted from the cloud server 3510. In step S4265, the portable terminal 3520 activates the received control program or makes it activable.

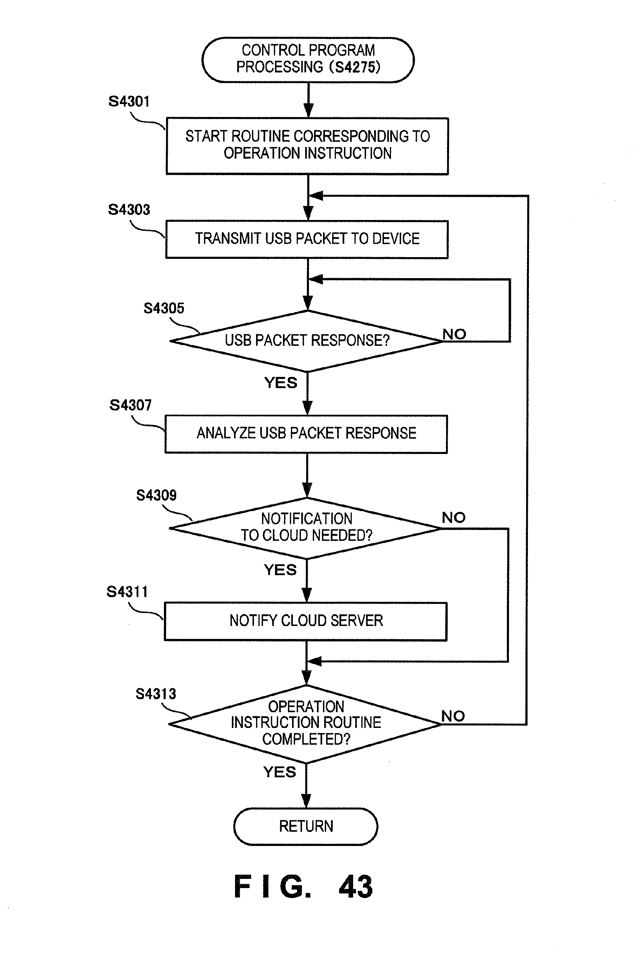

In step S4271, the portable terminal 3520 determines whether a device operation instruction is received from the cloud server 3510. If an operation instruction is received, the portable terminal 3520 advances to step S4273 and analyzes the operation instruction. In step S4275, the portable terminal 3520 performs control program processing corresponding to the operation instruction (see Fig. 43). When the operation corresponding to the operation instruction is completed, the portable terminal 3520 transmits an operation completion report to the cloud server 3510 in step S4277.

### (Control Program Processing)

Fig. 43 is a flowchart showing the processing procedure of control program processing S4275 according to this embodiment.

In step S4301, the portable terminal 3520 starts a routine corresponding to an operation instruction. In step S4303, the portable terminal 3520 transmits a USB packet to the device. In step S4305, the portable terminal 3520 waits for a USB packet response from the device. Upon receiving a response, the portable terminal 3520 analyzes the response from the device in step S4307. In step S4309, the portable terminal 3520 determines based on the analysis of the response from the device whether a notification to the cloud server 3510 is necessary. For example, in a state of emergency such as fault, a notification is necessary. If a notification is necessary, the portable terminal 3520 sends the notification to the cloud server 3510 in step S4311. In step S4313, the portable terminal 3520 determines whether the routine of the instructed operation is completed. If the routine is not completed, the portable terminal 3520 returns to step S4303 and repeats the processing. If the routine is completed, the portable terminal 3520 returns.

According to this embodiment, the portable terminal partially executes device control by effectively using the resource of the portable terminal. This can reduce the load on the information processing apparatus (server or the like). It is also possible to perform high-speed processing while eliminating a communication delay between the device and the information processing apparatus.

### [Other Embodiments]

In the above embodiments, a method of performing communication via the USB port of a smartphone has been described. However, the present invention is not limited to this. For example, communication may be performed between the smartphone and an industrial robot by Wi-Fi^{®} or Bluetooth^{®}.

For example, when performing Bluetooth^{®} communication between the industrial robot and the smartphone, a device that sends USB data on Bluetooth^{®} is added to the industrial robot side. The smartphone extracts the USB data in the Bluetooth^{®} communication and transmits it to the cloud server. If control is designed assuming Bluetooth^{®} from the beginning, control data from the cloud server may be relayed via the Bluetooth^{®} communication of the smartphone, and environment information may be provided.

The smartphone may transmit a parameter representing that communication is performed by Bluetooth^{®} or Wi-Fi^{®} to the cloud server. A communication delay, a communication resending ratio, and other communication quality information may be transmitted to the cloud server. The cloud server side may totalize the information and the degree of achievement of operations, and when communication changes from USB to Bluetooth^{®}, calculate a recommended control range for automatic response on the terminal side and provide it to the terminal side. A predetermined number of recommended control ranges may be proposed to the user of the terminal.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The cloud server may collect various kinds of information including not only the degree of achievement of operations of the apparatus but also the deficiency information of the end product, personal evaluation, and problems in operation after shipment as the evaluation of the provided product. This makes it possible to reduce problems for the end user by adjusting the timing of controlling devices in accordance with the evaluation.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention on the computer, a medium storing the program, and a WWW (World Wide Web) server that causes a user to download the program. In particular, the present invention incorporates at least a non-transitory computer readable medium.

This application claims the benefit of Japanese Patent Application No. 2012-123800 filed on May 30, 2012, which is hereby incorporated by reference herein in its entirety.

## Claims

1. An information processing apparatus comprising:
a device information receiver that receives, from a first portable terminal, device information for identifying a device connected to the first portable terminal;
an operation information receiver that receives, from the first portable terminal, operation condition information representing an operation condition of the device acquired by the first portable terminal; and
a device controller that controls the device based on the device information and the operation condition information.

2. The information processing apparatus according to claim 1, wherein the operation condition information includes specification information representing specifications of the device and environment information representing an environment in which the device is placed.

3. The information processing apparatus according to claim 2, wherein environment information includes one of a temperature, a humidity, an atmospheric pressure, and an operation time.

4. The information processing apparatus according to any one of claims 1 to 3, further comprising a program selector that selects, based on the device information and the operation condition information, an application program, a device driver program and parameters thereof which are configured to control an operation of the device,
wherein said device controller controls the device by executing the application program and the device driver program using the parameters.

5. The information processing apparatus according to claim 4, further comprising an accumulator that accumulates a history of the device information, the operation condition information and a combination of the application program, the information processing apparatus, and the parameters selected by said program selector, together with an evaluation of the operation by the combination,
wherein said program selector, by referring to the history accumulated in said accumulator, selects the application program, the device driver program, and the parameters based on the device information and the operation condition information which are received.

6. The information processing apparatus according to claim 4 or 5, further comprising a program changer that changes, based on the operation condition information received after a start of control of the device by said device controller, at least one of the application program, the device driver program, and the parameters thereof selected by said program selector.

7. The information processing apparatus according to any one of claims 1 to 6, wherein said operation information receiver comprises an operation condition information acquirer that receives a video captured by the first portable terminal and representing the environment in which the device is placed, and acquires the operation condition information of the device from the video.

8. The information processing apparatus according to claim 6 or 7, wherein said operation information receiver further receives, from the first portable terminal, operation state information representing an operation state of the device acquired by the first portable terminal, and
said program changer changes, based on at least one of the operation condition information and the operation state information received after the start of control of the device, at least one of the application program, the device driver program, and the parameters thereof selected by said program selector.

9. The information processing apparatus according to claim 8, wherein said operation information receiver comprises an operation state information acquirer that receives a video captured by the first portable terminal and representing the operation state of the device, and acquires the operation state information of the device from the video.

10. The information processing apparatus according to any one of claims 1 to 9, wherein said device information receiver further receives, from a second portable terminal, device information for identifying a sensor connected to the second portable terminal, and
said operation information receiver further receives detection information of the sensor representing a state of the device from the second portable terminal, and
said device controller controls the device, using the device information and the operation condition information that are received from the first portable terminal and the detection information of the sensor received from the second portable terminal.

11. The information processing apparatus according to claim 10, wherein said device controller comprises a sensor/device combination storage that stores a combination of the device connected to the first portable terminal and the sensor connected to the second portable terminal.

12. The information processing apparatus according to any one of claims 1 to 11, wherein the device comprises a plurality of devices each of which operates at a predetermined timing, and
the apparatus further comprises:
a plurality of device information receivers and a plurality of operation information receivers respectively corresponding to the plurality of devices;
a plurality of device controllers respectively corresponding to the plurality of devices; and
a timing controller that respectively instructs said plurality of device controllers to control the operation in accordance with the predetermined timing.

13. The information processing apparatus according to any one of claims 1 to 11, wherein the device comprises a plurality of devices each of which operates at a predetermined timing, and
the apparatus further comprises:
one device information receiver and one operation information receiver corresponding to the plurality of devices;
one device controller corresponding to the plurality of devices; and
a timing controller that instructs said one device controller to control the operation in accordance with the predetermined timing.

14. The information processing apparatus according to any one of claims 1 to 13, wherein said device controller transmits a signal to control the device via the first portable terminal in response to reception of a signal from the device via the first portable terminal.

15. The information processing apparatus according to any one of claims 1 to 14, wherein said device controller transmits a control program configured to execute a series of operations of the device to the first portable terminal in accordance with an operation sequence of the device.

16. The information processing apparatus according to claim 15, wherein the control program is a program that executes a series of operations of transmitting the signal to control the operation of the device at the predetermined timing in response to reception of the signal from the device.

17. The information processing apparatus according to any one of claims 1 to 16, wherein said device controller comprises an operation instruction receiver that receives an operation instruction of the device from the first portable terminal, and controls the device via the first portable terminal in accordance with the operation instruction received by said operation instruction receiver.

18. The information processing apparatus according to any one of claims 1 to 17, wherein the device comprises a USB device connected to a USB connector of a portable terminal by a USB cable.

19. A control method of an information processing apparatus, comprising:
receiving, from a first portable terminal, device information for identifying a device connected to the first portable terminal;
receiving, from the first portable terminal, operation condition information representing an operation condition of the device acquired by the first portable terminal; and
controlling the device based on the device information and the operation condition information.

20. A control program of an information processing apparatus, the program causing a computer to execute:
receiving, from a first portable terminal, device information for identifying a device connected to the first portable terminal;
receiving, from the first portable terminal, operation condition information representing an operation condition of the device acquired by the first portable terminal; and
controlling the device based on the device information and the operation condition information.

21. A portable terminal comprising:
a device connector;
a device information transmitter that transmits, to an information processing apparatus, device information for identifying a device connected to said device connector;
an operation information transmitter that acquires one of operation condition information representing an operation condition of the device and operation state information representing an operation state of the device and transmits the one of the operation condition information and the operation state information to the information processing apparatus; and
a device control relay unit that relays control of the device by the information processing apparatus based on the device information and one of the operation condition information and the operation state information.

22. The portable terminal according to claim 21, wherein the operation condition information includes specification information representing specifications of the device and environment information representing an environment in which the device is placed.

23. The portable terminal according to claim 22, wherein environment information includes one of a temperature, a humidity, and an atmospheric pressure.

24. The portable terminal according to any one of claims 21 to 23, wherein said device control relay unit relays control of the device by execution of an application program and a device driver program using parameters, which are selected by the information processing apparatus based on the device information and one of the operation condition information and the operation state information.

25. The portable terminal according to any one of claims 21 to 24, wherein said operation information transmitter comprises an image capturer that captures one of a video representing the operation condition under which the device is placed and a video representing the operation state of the device, and transmits, to the information processing apparatus, the video captured by said image capturer as one of the operation condition information and the operation state information.

26. The portable terminal according to any one of claims 21 to 25, further comprising:
a control program receiver that receives a control program configured to execute a series of operations of the device from the information processing apparatus in accordance with an operation sequence of the device; and
a program executor that executes the control program while exchanging a signal with the device and implements the series of operations of the device.

27. The portable terminal according to claim 26, wherein the control program is a program that executes a series of operations of transmitting the signal to control the operation of the device at the predetermined timing in response to reception of the signal from the device.

28. The portable terminal according to any one of claims 21 to 27, wherein said device connector comprises a USB connector, and the device comprises a USB device connected to said USB connector by a USB cable.

29. A control method of a portable terminal including a device connector, comprising:
transmitting, to an information processing apparatus, device information for identifying a device connected to the device connector;
acquiring one of operation condition information representing an operation condition of the device and operation state information representing an operation state of the device and transmitting the one of the operation condition information and the operation state information to the information processing apparatus; and
relaying control of the device by the information processing apparatus based on the device information and the operation condition information.

30. A control program of a portable terminal including a device connector, the program causing a computer to execute:
transmitting, to an information processing apparatus, device information for identifying a device connected to the device connector;
acquiring one of operation condition information representing an operation condition of the device and operation state information representing an operation state of the device and transmitting the one of the operation condition information and the operation state information to the information processing apparatus; and
relaying control of the device by the information processing apparatus based on the device information and the operation condition information.

31. An information processing system comprising a portable terminal including a device connector, a device connectable to said device connector, and an information processing apparatus connected to said portable terminal via a network,
said portable terminal comprising:
a device information transmitter that transmits device information for identifying said device connected to said device connector to said information processing apparatus via the network; and
an operation information transmitter that acquires operation condition information representing an operation condition under which said device is placed and transmits the operation condition information to said information processing apparatus via the network, and
said information processing apparatus comprising a device controller that controls said device via the network and said portable terminal based on the device information and the operation condition information.

32. An information processing method of an information processing system including a portable terminal including a device connector, a device connectable to the device connector, and an information processing apparatus connected to the portable terminal via a network, the method comprising:
transmitting device information for identifying the device connected to the device connector from the portable terminal to the information processing apparatus via the network;
acquiring operation condition information representing an operation condition under which the device is placed and transmitting the operation condition information from the portable terminal to the information processing apparatus via the network; and
controlling the device via the network and the portable terminal based on the device information and the operation condition information.
